# EUROPÄISCHE PATENTSCHRIFT

(11) **EP 3 654 795 B1**
(45) Veröffentlichungstag und Bekanntmachung des Hinweises auf die Patenterteilung: **30.06.2021**
(21) Anmeldenummer: 18742776.0
(22) Anmeldetag: 17.07.2018
(51) Int. Cl.: A43B 7/06, A43B 13/02, A43B 13/12, A43B 13/14, A43B 17/00, A43B 17/06, A43B 17/08

(54) **EINLEGE- ODER BRANDSOHLE MIT DRUCKBELÜFTUNG**
INSOLE OR MIDSOLE WITH PRESSURE VENTILATION
SEMELLE INTÉRIEURE OU INTERCALAIRE AVEC AÉRATION PAR PRESSION

(30) Priorität: 19.07.2017 DE 102017116236
(43) Veröffentlichungstag der Anmeldung: 27.05.2020
(73) Patentinhaber: Mayer GbR, 88045 Friedrichshafen (DE)
(72) Erfinder: MAYER, Achim, 73342 Bad Ditzenbach (DE)
(74) Vertreter: Riebling, Peter
(86) Internationale Anmeldenummer: PCT/EP2018/069369
(87) Internationale Veröffentlichungsnummer: WO 2019/016196

(56) Entgegenhaltungen:
- WO-A1-97/14326
- DE-A1- 3 103 230
- DE-U1-202008 018 366
- FR-A1- 2 591 440
- US-A1- 2017 127 751

## Beschreibung

Die Erfindung betrifft eine Einlege- oder Brandsohle mit Druckbelüftung nach dem Oberbegriff des Patentanspruches 1.

Mit der DE 1 872 338 U1 ist eine bei den Gehbewegungen die Durchlüftung des Fußsohlenbettes bewirkende Schuheinlage bekannt geworden, die sowohl fest in das Sohlenwerk von Schuhen eingearbeitet werden, aber auch als sogenannte Einlegesohle Verwendung finden kann

Das Dokument US 2017/127751 offenbart eine Sohlenkonstruktion mit einer gewellten Stützstruktur, auf der eine formkomplementäre Druckplatte angeordnet ist, wobei die beiden Elemente Durchgangslöcher aufweisen, um den Durchgang von Luft zu ermöglichen und somit den Fußbekleidungsartikel zu belüften.

Die Erfindung wird durch den unabhängigen Anspruch 1 offenbart, wobei bevorzugte Ausführungsformen in den abhängigen Ansprüchen 2-15 offenbart sind.

Wie bei der Erfindung soll die dortige Druckbelüftungssohle in der Weise wirken, dass durch die wechselnden Druck- und Entlastungsvorgänge beim Gehen in einem schichtenartig aufgebauten Einlegeblatt zwischen der Schuhsohle und der Fußsohle eine Luftzirkulation erzeugt wird, die einerseits die unangenehme Schweißbildung und die ungesunden Einwirkungen der mangelnden Belüftung der Fußsohlenhaut unterbindet und andererseits eine angenehme Kühlung bei heißem Wetter ermöglicht.

Dabei ist zwischen den aus einem Gewebematerial bestehenden Deck- und Unterschicht eine in Zick-Zackform gefaltete Folie, vorzugsweise aus Plastikmaterial eingelegt, die beispielsweise an den Zehenrändern, am Rand der Fersengegend und im Bereich der Fußkehle an den Gewebe-Deckschichten befestigt ist. Die Rippen der Folie laufen vorzugsweise quer zur Sohlenlängsrichtung. Die Folie ist in ihren Umrissen kleiner gehalten als der Umriss der Schuheinlage, so dass zwischen den Ausmündungen der Hohlräume und den am Rand verbundenen Deck- und Unterschichten ein um das ganze Fußbett laufender Kanal entsteht.

Wird die Zick-Zack-Folie beispielsweise in der Fußballengegend eingedrückt, so entweicht die in den Hohlräumen in diesem Bereich vorhandene Luft seitlich in den Kanal und gelangt durch das Gewebe der Deck- und Unterschicht an den Rand des Fußbettes, an dem ein Luftaustausch zustande kommt. Ein Teil der ausgepressten Luft gelangt durch die Poren des Gewebes der Deckschicht nach oben an die Fußsohle.

Neben der Anordnung einer aus einer zick-zack-förmig gefalteten Plastikfolie bestehenden Einlage offenbart die Druckschrift auch zwei spiegelbildlich aufeinander gelegte zick-zack-förmige Plastikfolien, welche sich beim Zusammendrücken flach zusammen falten und die in den Hohlräumen zwischen den Falten gespeicherte Luft in Richtung zum Umfangsrand der Einlage verdrängen. Ebenso werden luftgefüllte, längsseitig miteinander verbundene Schläuche beschrieben, die quer zur Längsachse der Einlage eingebaut sind und die beim Gehen zusammen gedrückt, wobei die im jeweiligen Schlauch enthaltene Luft ausgepresst wird.

Nachteil einer zusammen drückbaren und zick-zack-förmig gefalteten Plastikfolie ist, dass die im spitzen Winkel in einem Knick zusammenlaufenden Folienstreifen beim Zusammendrücken während der Gehbewegung brechen und sich aufspalten können. Die Lebensdauer einer solchen Folie ist deshalb stark begrenzt. Beim Brechen der Knickstellen arbeiten sich die abgebrochenen Stücke durch die aus Gewebe bestehende Deckschichten hindurch und können die Fußsohle verletzen.

Darüber hinaus werden während der Abrollbewegung störende Knack- und Knistergeräusche erzeugt. Wegen der Nachgiebigkeit (Kompressibilität) der Sohlenkonstruktion während der Gehbewegung wird keine stabile Gegenkraft an der Fußsohle von Seiten des Untergrunds erzeugt, was zu einer unsicheren Abrollbewegung der Fußsohle und der Gefahr der seitlichen Ausknickung des Fußgewölbes führt. Die Gefahr einer Halux-Bildung ist daher nicht auszuschließen.

Die genannte Druckschrift beschreibt in einem anderen Ausführungsbeispiel zwei spiegelbildlich aufeinander gelegte zick-zack-förmig gefaltete Plastikfolien, bei denen das gleiche Problem der Bruchgefahr und der Geräuscherzeugung besteht und zudem noch das weitere Problem, dass sich die obere Zick-Zack-Lage gegenüber der unteren Zick-Zack- Lage verschieben kann und die beiden Lagen in gegenseitigen Verzahnungseingriff gelangen, wodurch der Belüftungseffekt verschwindet. Die verschiebungssichere Fixierung der beiden Lagen ist deshalb aufwendig, wenn nicht gar unmöglich.

Auch die in der dritten Ausführungsform genannten, aneinander angelegten und im Bereich ihrer Berührungslinien mit einander verbundenen, luftgefüllten Schläuche haben sich nicht bewährt. Auch hier besteht neben der unerwünschten Geräuschbildung die Gefahr, dass die Schläuche auf längere Sicht wegen der starken Kräfte, welche ein Zusammendrücken erwirken, brechen und sich gegeneinander verschieben.

Nachteilig bei der bekannten Druckbelüftungssohle ist demnach, dass eine laufstabile Sohle mit einem von Bodenunebenheiten unabhängigem Gegendruck nicht gegeben ist, weil die untere und obere Sohlenplatte aus einem biegeschlaffen Textilmaterial bestehen. Es ist demnach lediglich eine untere, flache Sohlenplatte vorhanden, auf der die zick-zack-gefaltete Folie aufliegt, die nach oben von einer ebenfalls flachen, biegeschlaffen Druckplatte abgedeckt ist, auf der die Fußsohle aufliegt. Eine stabile Unterstützung der Fußsohle beim Laufen ist durch die flache Sohlenplatte nicht möglich. Vielmehr passt sich die (untere) flache Sohlenplatte in unerwünschter Weise an den Untergrund an und bildet somit keine stabile Abstützung der Fußsohle beim Abrollen auf einem unebenen Untergrund.

Die fußsohlenseitige Druckplatte ist ebenfalls als biegeschlaffe, flache Platte ausgebildet, sodass die bekannte Druckbelüftungssohle aus zwei, einen gegenseitigen Abstand zueinander aufweisenden biegeschlaffen Flachplatten besteht, zwischen denen einen zick-zack-gefaltete Kunststofffolie angeordnet ist.

Somit kann festgestellt werden, dass eine Druckbelüftungssohle nach diesem Stand der Technik mit bei Druckbelastung in sich zusammenfallenden, luftgefüllten Hohlräumen im Bereich einer zick-zack-gefalteten Kunststofffolie in mehrfacher Hinsicht nachteilig ist, und weder eine ausreichende Unterstützung der Fußsohle beim Gehen, noch eine lange Lebensdauer aufweist, noch eine ausreichende Belüftung gewährleistet und im Übrigen zu Verletzungen an der Fußsohle führen kann.

Mit der US 2 234 190 A ist eine mehrlagige Federstahlsohle bestehend aus zwei voneinander beabstandet angeordneten Zick-Zack förmigen Federstahl-Blechen bekannt geworden, zwischen denen ein mit Luft gefüllter Foliensack angeordnet ist. Die Zick-Zack-Profile sind in senkrechter Richtung zur Längsachse angeordnet. Die genannte mehrlagige Federstahlsohle hat den Zweck, eine Dämpfungswirkung durch den zwischen den Federstahl-Lagen angeordneten luftgefüllten Foliensack zu ermöglichen. Eine Belüftung der Fußsohle ist damit nicht möglich.

Mit der US 2 334 719 A ist eine aus Gummi oder einem anderen zusammendrückbaren Material bestehende Druckbelüftungssohle bekannt geworden, bei der in einer Vielzahl von reihen- und spaltenförmig angeordneten Belüftungsstellen Nuten und stegartige Vorsprünge angeordnet sind. Diese Belüftungsstellen sind als kurze, rechteckförmige Belüftungsstellen ausgebildet, deren Längsachse im rechten Winkel zur Längsachse der Druckbelüftungssohle gerichtet ist. Während des Gehens werden die quer zur Längsachse gerichteten Nuten aufgrund der Knickwirkung in der Sohle zusammen gedrückt und pressen die dort enthaltene Luft durch Perforationsbohrungen in Richtung auf die Fußsohle aus.

Anstatt der Anordnung von zusammendrückbaren Nuten beschreibt die Druckschrift auch eine Ausführung, bei welcher im Zwischenraum zwischen den aus Gummi bestehenden Ober- und Unterlagen eine wellenförmige Zwischenlage angeordnet ist, die ein verbessertes Federungsvermögen erbringen soll und ebenfalls aus einem elastisch zusammendrückbaren GummiMaterial besteht.

Die genannte wellenförmige und zusammenpressbare Einlage bildet im Zwischenraum zwischen den Wellenbergen und Wellentälern luftgefüllte kompressible Räume, ausdehnende Luft während des Gehens verdrängt wird.

Nachteil der genannten Anordnung ist, dass die Belüftungsstellen nur kurz ausgeführt sind und unter gegenseitigem Abstand reihen-und spaltenförmig in die Druckbelüftungssohle eingebaut sind. Damit ist der Belüftungseffekt minimal.

Weiterer Nachteil ist, dass der Belüftungseffekt durch die gummi-elastische Komprimierung der wellenförmigen Einlage erbracht wird, was mit dem Nachteil verbunden ist, dass die Einlage einem starken Verschleiß unterliegt und die Elastizität der wellenförmigen Einlage mit zunehmendem Alter nachlässt. Der wellenförmige Aufbau fällt deshalb zusammen und der Belüftungseffekt wird nicht mehr erreicht.

Mit dem Gegenstand der US 4 910 882 B1 ist eine weitere Druckbelüftungssohle bekannt geworden, bei welcher in einer aus Querrippen bestehenden Sohle während der Gehbewegung die in den trapezförmig profilierten Nuten eingeschlossene Luft heraus gepresst werden soll. Der Belüftungseffekt ist dabei minimal. Eine forcierte Druckbelüftung ist nicht gegeben.

In der auf die gleiche Anmeldergemeinschaft zurückgehenden DE 20 2008 018 366 U1 ist eine gelochte Einlegesohle beschrieben worden, die als Struktursohle aus einem Federstahl oder einem vergleichbaren Kunststoffmaterial gefertigt ist und die eine im Winkel zur Mittenlängslinie verlaufende rippenförmige Querprofilierung aufweist, wobei die Querprofilierung im Vorderfußbereich von der im Hinterfussbereich unterschiedlich ist. Ein Belüftungseffekt war nur in Verbindung mit einem unterhalb der Einlegesohle im Schuh eingebauten Waben- oder Kanalsystem beschrieben worden. Neben dem geringen Belüftungseffekt wird zudem die Einbauhöhe einer solchen Konstruktion in unerwünschter Weise vergrößert.

Das Wellenprofil besteht aus einer Anzahl von aufeinanderfolgend angeordneten Wellen, von denen jede Welle aus einem Wellenberg und einem sich daran anschließenden Wellental besteht.

Hinsichtlich der weiteren Merkmale einer solchen Struktursohle bzw. einer Brandsohle werden auf die DE 100 15 240 A1 oder die DE 199 56 072 A1 verwiesen.

In diesen beiden Druckschriften ist der Aufbau und die Funktion einer solchen Einlegesohle und/oder Brandsohle genau beschrieben und die dort beschriebenen Eigenschaften einer derart ausgebildeten Struktursohle sind auch Gegenstand der vorliegenden Erfindung.

Bei der Benutzung einer Einlegesohle oder einer Brandsohle nach dem Gegenstand der DE 20 2008 018 366 U1 hat sich herausgestellt, dass der Belüftungseffekt und der Feuchtetransport noch wesentlich gesteigert werden könnte.

Der Erfindung liegt deshalb die Aufgabe zugrunde, ausgehend von einer Einlegesohle oder Brandsohle für einen Schuh, nach dem Gegenstand der DE 1 872 338 U1 den Luft- und Feuchtetransport aus der Einlegesohle und/oder der Brandsohle wesentlich zu verbessern, insbesondere die Lebensdauer einer solchen Einlegesohle oder Brandsohle zu verlängern, eine Verletzungsgefahr und eine Geräuschbildung während der Abrollbewegung zu vermeiden und eine verbesserte Stützfunktion für die Fußsohle zur Verfügung zu stellen..

Zur Lösung der gestellten Aufgabe ist die Erfindung durch die technische Lehre des Anspruches 1 gekennzeichnet.

Vorteilhaft ist, dass nunmehr eine Druckbelüftung unter Verwendung der besonderen Eigenschaften der wellenförmig gerippten Einlege- oder Brandsohle stattfindet, weil erfindungsgemäß auf dem Wellenprofil einer solchen Struktursohle eine obere biegeelastische Druckplatte angeordnet ist, die vom Körpergewicht des Benutzers beim Gehen in die Wellentäler der Struktursohle hinein verdrängbar ist.

Vorteilhaft ist, dass die (unten liegende) gewellte Struktursohle der Druckbelüftungssohle als wellenförmige Struktursohle aus einem Federstahl oder einem vergleichbaren biegeelastischen Kunststoffmaterial gefertigt ist, deren Querprofilierungen als Wellenprofil mit annähernd abgerundeten Wellenbergen und Wellentälern ausgebildet sind und gegenüber einer senkrecht auf die Struktursohle einwirkenden Druckkraft druckstabil und verformungsfest sind. Die fußsohlenseitige Druckplatte ist in die formstabilen Wellentäler der Struktursohle in der Art einer Pump- und/oder Kompressionsplatte hinein verdrängbar und verdrängt die Luft im Bereich von Belüftungskanälen, die im Zwischenraum zwischen der Oberseite der Struktursohle und der Unterseite der Druckplatte gebildet sind. Dabei kann die eine Wellenstruktur aufweisende Druckplatte plattenförmig aus einem biegeelastischen Kunststoff mit einer bevorzugten Dicke im Bereich zwischen 1 bis 3 mm durchgehend über die gesamte Sohlenlänge ausgebildet sein.

In einer anderen Ausführung kann die plattenförmige Druckplatte mit einem elastomeren Druckkörper verbunden sein, der eine verbesserte Bettung der Fußsohle auf der die Wellenstruktur aufweisenden Druckplatte gewährleistet. Ferner kann sich die Wellenstruktur auch bis in die sohlenzugewandte Oberseite des elastomeren Druckkörpers fortgesetzt sein, sodass ein Druck der Fußsohle unmittelbar auf die Wellenstruktur der mit dem elastomeren Druckkörper verbundenen Druckplatte einwirkt.

Im Vergleich zur DE 1 872 338 U1 wird der bekannte dreischichtige Sohlenaufbau, bestehend aus einer unteren Flachsohle, einer darauf befestigten Zick-Zack-Folie und einer fußsohlenseitigen, weiteren Flachsohle vermieden und bei der Erfindung bevorzugt -aber nicht ausschliesslich - nur noch ein zweischichtiger Aufbau aus zwei Sohlenprofilen vorgeschlagen, wobei die untere Sohle stets als gewellte, biegeelastische verformungsstabile Struktursohle ausgebildet ist, während die obere Sohle entweder als mindestens teilweise komplementäre Drucksohle oder als flache Sohle ausgebildet sein kann.

Dadurch wird der Sohlenaufbau einfacher, in seiner Bauhöhe flacher und die vorher notwendige Zick-Zack-Folie wird durch die Sohlenstruktur von zwei direkt aufeinander liegenden Struktursohlen, nämlich der unteren gewellten Struktursohle und der oberen - entweder mindestens teilweise komplementären wellenförmigen- oder flachen Druckplatte erreicht. Damit ergibt sich bei einem einfacheren und flacheren Sohlenaufbau ein verstärkter Belüftungseffekt mit einem gegenüber dem Untergrund abgestützten Struktursohlenaufbau, wobei die untere Sohle - wegen ihrer Eigenschaft als gewellte Struktursohle - nicht komprimierbar ist, im Gegensatz zur der als Mittellage verwendeten zick-zack-förmig gefalteten Kunststofffolie nach dem Stand der Technik.
Damit wird eine Druckbelüftungssohle beschrieben, wie sie vorher noch nicht bekannt war. Die bekannte Rippenstruktur der Struktursohle (siehe die DE 100 15 240 A1 oder die DE 199 56 072 A1) wird nun für eine Druck- und/oder Zwangsbelüftung der Struktursohle verwendet, was durch die Hinzunahme einer biegeelastischen Druckplatte erfolgt, die auf der Rippenstruktur der Struktursohle aufgelegt wird.

Es wurde erkannt, dass die aus den oben angegebenen Druckschriften bekannte Struktursohle, die bevorzugt als gerippte Federstahlsohle ausgebildet ist, während des Abrollens der Fußsohle im Schuh nur eine Biegung in Längsrichtung zur Rippenstruktur zulässt. Die jeweilige Biegelinie ist demnach parallel zur jeweiligen Längserstreckung der Federstahlrippe. Aus diesem Grund lässt die Struktursohle eine Abrollbewegung in Längsrichtung der Struktursohle zu, verhindert aber eine Durchbiegung in einer hierzu senkrechten Richtung.

Gegenüber der DE 1 872 338 U1 wird der Vorteil erreicht, dass eine querstabile Unterstützung der Fußsohle zu Verfügung gestellt wird und die Druckbelüftungssohle nicht während der Abrollbewegung komprimiert wird, was beim Stand der Technik neben einer unerwünschten Geräuschbildung auch eine ungenügende Abstützung der Fußsohle und ein unsicheres Laufgefühl verursachte.

Daraus resultiert die Erkenntnis, dass die Wellenberge und die dazu komplementären Wellentäler der Struktursohle gegenüber einer senkrecht auf die Struktursohle einwirkenden Druckkraft druckstabil und verformungsfest sind. Sie biegen sich deshalb bei einer solchen Druckbelastung nicht durch und verformen sich nicht. Sie wirken demnach als formstabiles Gegenlager für eine auf die Wellenberge aufgelegte Druckplatte, die sich deshalb in die formstabilen Wellentäler hinein verformen kann und das dort vorhandene Luftvolumen komprimieren kann.

Damit wirkt die auf die rippenförmige Querprofilierung aufgelegte Druckplatte wie ein Kompressionswerkzeug. Die Druckplatte ist deshalb mit einem Kolben zu vergleichen, der in die verformungsstabilen Zylinderräume (Wellentäler der rippenförmigen Struktur der Struktursohle) eindringt und dort zu einer Druckbelüftung führt. Sie macht aber die während der Abrollbewegung der Fußsohle erfolgende Biegebewegung der Struktursohle mit und verformt sich biegeelastisch zusammen mit der Struktursohle.

Dies ist ein Effekt, wie er noch nicht bekannt war, denn die Hinzunahme einer die rippenförmige Querprofilierung der Struktursohle abdeckenden, biegeelastischen Druckplatte führt zu einer verstärkten Druck- oder Zwangsbelüftung der Einlege- oder Brandsohle, die dann durch das Körpergewicht des Benutzers, der auf der Druckplatte sein Körpergewicht abwälzt, erfolgt.

Damit wird eine neue Eigenschaft der an sich bekannten federelastischen Struktursohle vorgestellt, weil erkannt wurde, dass die an sich bei Druckbelastung von oben nicht nachgiebigen Wellentäler und Wellenberge der bekannten Struktursohle nunmehr als unverformbarer, rillen- oder rinnenförmiger Kompressionsraum genutzt werden können, wenn auf der rippenförmigen Querprofilierung der Struktursohle eine biegeelastische Druckplatte aufgelegt wird, welche geeignet ist, durch das Körpergewicht des Benutzers bedingt, in die Wellentäler der Struktursohle hinein verdrängt zu werden. Die Struktursohle bleibt dabei trittstabil und ist nicht kompressibel.

Dadurch ergibt sich eine verstärkte Zwangsbelüftung der Wellentäler der Struktursohle durch die darauf aufgelegte Druckplatte, die möglichst verschiebungsgesichert auf der Struktursohle festgelegt werden sollte.

Eine Verschiebungssicherung kann hierbei in unterschiedlicher Weise erfolgen.

In einer ersten Ausführungsform kann es vorgesehen sein, dass die Druckplatte raumfüllend im Innenraum eines Schuhs angeordnet ist, so dass sie allseitig an den Innenseiten des Obermaterials des Schuhs anliegt.

In einer anderen Ausgestaltung kann es vorgesehen sein, dass die Druckplatte auf den Wellenbergen der darunter angeordneten Struktursohle festgeklebt wird.

In einer dritten Ausgestaltung kann es vorgesehen sein, dass die Druckplatte einfach lose auf die Struktursohle aufgelegt wird.

Die dadurch gebildete Druckbelüftungssohle kann als Einlegesohle in einem Schuh verwendet werden oder als Brandsohle in der Art eines Sohlenchassis in einem Schuh eingebaut sein.

In einem Beispiel, wobei das Beispiel nicht Teil der beanspruchten Erfindung ist, ist die Druckplatte als ebene Platte ausgebildet und kann aus einem beliebigen, biegeelastischen Material bestehen, wie z. B. ebenfalls einem plattenförmigen Federstahlmaterial, welches ungerippt ist oder aus einer Kunststoffplatte mit einer Stärke von z. B. 0,1 bis 2 mm oder anderen, geeigneten plattenförmigen und biegeelastischen Materialien.

In einer ersten Ausführung kann die Fläche der Druckplatte etwa der Fläche der darunter angeordneten Struktursohle entsprechen. Die Struktursohle kann entweder als Halbsohle oder als Vollsohle - sowohl als Einlege- als auch als Brandsohle - ausgebildet sein. Insbesondere bei der Verwendung in Damenpumps oder anderen damit vergleichbaren Schuhtypen reicht es meistens aus, die Einlege- oder Brandsohle (Struktursohle) nur im Vorderfussbereich anzuordnen. Die Druckplatte ist auch in diesen Fällen etwa flächengleich mit der Struktursohle.

In einer zweiten Ausführung kann es vorgesehen sein, dass die Druckplatte nur einen Teile der Fläche der Struktursohle überdeckt. Es kommt dann auch nur in diesem Überdeckungsbereich zu einer zwangsgesteuerten Druckbelüftung. Zur Abführung der sich in den Wellentälern der Struktursohle ausbildenden Luftströme, die aus der vorher erwähnten Zwangsbelüftung herrühren, ist es in einer ersten Ausgestaltung vorgesehen, dass die Luftströme an den (in seitlicher Richtung im Winkel zur Laufrichtung weisenden) Stirnseiten der rinnenförmigen Kompressionsräume (das sind die rillenförmigen Wellentäler der Struktursohle) stirnseitig ausströmen und somit an der Innenseite des Obermaterials des Schuhs in den Schuhinnenraum gelangen.

In einer anderen Ausgestaltung kann es vorgesehen sein, dass die die untere Struktursohle abdeckende, obere Druckplatte vielfache Perforierungen aufweist, so dass nicht nur eine in Längsrichtung der Wellentäler der Struktursohle forcierter Luftstrom entsteht, sondern der Luftstrom wird noch zusätzlich (oder allein) durch die Bohrungen oder Perforationen in der Druckplatte direkt nach oben in den Innenraum des Schuhs gegen die Fußsohle des Benutzers eingeleitet.

Damit ist sichergestellt, dass bei jeder Änderung der Druckbelastung, die der Fuß des Benutzers auf die Druckplatte während des Gehens oder während eines Stellungswechsels auf die Druckplatte ausübt, zu einer Druckbelüftung des Kompressionsraums führt. Wie eingangs ausgeführt, ist der jeweilige rinnenförmige Kompressionsraum durch die Wellentäler der Struktursohle gebildet, dessen obere Abdichtung durch die sich in die Wellentäler hinein verformende Druckplatte gebildet ist. Der Benutzer läuft sozusagen auf Luft, denn die durch die Belüftungskanäle zwischen der Wellenstruktur der Struktursohle und der darauf liegenden Druckplatte eingeschlossene Luft bildet ein zusätzliches Luftpolster, was ein besonders günstige und schonende Bettung der Fußsohle bewirkt.

Es kann in einigen Bereichen der Druckbelüftungssohle vorgesehen sein, dass einige oder mehrere der Belüftungskanäle zwischen der Wellenstruktur der Struktursohle und der darauf liegenden Druckplatte hermetisch dicht abgeschlossen sind, um so luftgefüllte Kompressionsräume zu bilden, die ein besonders angenehmes Laufgefühl erzeugen. Solche abgeschlossenen Luftvolumina werden bevorzugt im Fersenbereich angeordnet.

In einer Ausführungsform gemäß der Erfindung wurde erkannt, dass eine weitere Steigerung der Druck- oder Zwangsbelüftung im Innenraum des Schuhs dadurch möglich ist, dass die Druckplatte nun nicht mehr als ebene biegeelastische Platte ausgebildet ist, sondern ebenfalls eine Wellenstruktur aufweist, die zu der Wellenstruktur der darunter liegenden Struktursohle mindestens teilweise komplementär ist. Die Wellenstruktur dieser Druckplatte ist - im Gegensatz zur Wellenstruktur der darunter liegenden Struktursohle - kompressibel. Das bedeutet, dass die Wellenberge und Wellentäler der Druckplatte bei einer Druckbelastung von Seiten der Fußsohle flach gedrückt werden und sich in die Wellenstruktur der Struktursohle hinein verdrängen und die dort im Bereich der Belüftungskanäle befindliche Luft komprimieren und in Längsrichtung des Belüftungskanals forciert ausstoßen.

Dies bedeutet, dass die Wellentäler der Wellenstruktur der Druckplatte auf den Wellenbergen der Struktursohle aufliegen und dass die Wellenberge der Druckplatte den Wellentälern der Struktursohle spiegelbildlich gegenüber liegen und dadurch eine Vielzahl von rinnenförmigen, druckbelüfteten Kompressionsräumen im Bereich der dadurch ausgebildeten Belüftungskanäle bilden.

Damit wird einerseits das Luftvolumen des Kompressionsraumes im Breich eines Belüftungskanals wesentlich erhöht, weil dem jeweiligen Wellental in der rippenförmigen Querprofilierung der Struktursohle ein Wellenberg der Druckplatte gegenüber liegt. Somit wird das Luftvolumen im Kompressionsraum verdoppelt.

Wenn die Biegeelastizität der wellenförmigen Druckplatte so ausgebildet ist, dass sich die Wellenberge der Druckplatte beim Gehen oder bei einer Gewichtsverlagerung des Fußes des Benutzers in die Wellentäler der Struktursohle hinein verdrängen, kommt es zu einem verstärkten Druckbelüftungseffekt in den rinnenförmigen Kompressionsräumen der Struktursohle.

Damit wird der Zwangsbelüftungseffekt entscheidend gesteigert.
Bei der Verwendung einer solchen, eine Wellenstruktur aufweisenden Druckplatte kann es vorgesehen sein, dass auch eine solche wellenförmige Druckplatte aus einem biegeelastischen Material besteht, wie z. B. einer Kunststoffplatte oder einer biegeelastischen Metallplatte, die - in diesem Fall - bevorzugt aus einem Federstahlmaterial besteht.

Ebenso kann es vorgesehen sein, dass die Wellenstruktur der Druckplatte, deren Oberfläche zur Fußsohle des Benutzers hinweist, mit einer zusätzlichen elastomeren Beschichtung ausgefüllt ist, so dass die zur Fußsohle des Benutzers gerichtete Oberfläche der wellenförmigen Druckplatte vollkommen eben, durchgehend und weichelastisch ausgebildet ist. Dadurch wird eine elastomerer Druckkörper gebildet, der z.B. aus einem geschäumten, geschlossenzelligen Kunststoff besteht.

In allen Fällen kann es vorgesehen sein, dass die Druckplatte (entweder als ebene Platte oder als wellenförmige Platte) zusätzliche Perforierungen aufweist, welche einen Luftdurchsatz durch die Oberfläche der Druckplatte nach oben hin zur Fußsohle hin ermöglichen.

Auch wenn eine elastische Abdeckung der Druckplatte von der Oberseite her erfolgt, können gleichwohl entsprechend profilierte Ausnehmungen, Bohrungen oder Perforierungen in der Druckplatte angeordnet sein.

Als besonderer Vorteil hat sich herausgestellt, wenn die elastische Beschichtung der Wellenstruktur oder der Planstruktur der Druckplatte mit einem, einen Memoryeffekt ausbildenden Kunststoff-Material erfolgt, weil dann die Fußsohle des Benutzers in besonders schonender und druckspitzenvermeidender Weise auf der Oberfläche der gewellten oder planen Druckplatte abrollt.

Zwar ist in dem angegebenen Ausführungsbeispiel eine reine Sinusform der Wellenstruktur, sowohl der Struktursohle als auch der Druckplatte dargestellt. Hierauf ist die Erfindung jedoch nicht beschränkt.

Es können sowohl in der bevorzugt aus Federstahl bestehenden Struktursohle als auch in der biegeelastischen Druckplatte andere Wellenformen verwendet werden.

Insbesondere kann es vorgesehen sein, dass die wellenförmigen, stetig ineinander übergehenden, abgerundeten Strukturen der Wellenberge nunmehr durch Geraden ersetzt sind und dass jeweils das - vorher abgerundete - Maximum eines Wellenberges durch eine horizontale Gerade ersetzt ist.

Statt einer derartigen sinusförmigen Wellenform sind deshalb alle anderen Wellenformen möglich, insbesondere das vorher beschriebene Trapezprofil. Ebenso sind asymmetrische Profilformen sowohl für die Struktursohle als auch für die die Struktursohle mindestens teilweise abdeckenden Druckplatte möglich.

In einem bevorzugten Ausführungsbeispiel ist vorgesehen, dass die seitlichen Luftauslässe, die bei der Wellenstruktur seitlich vorhanden sind, nur im Bereich des Vorderfußes angeordnet sein können, während im Hinterfußbereich derartige seitliche Luftauslassöffnungen nicht vorgesehen sind. Dort sind die Belüftungskanäle hermetisch dicht geschlossen und bilden dadurch luftgefüllte Kompressionsräume mit besonderen Federeigenschaften.

Es gibt mehrere bevorzugte Ausführungsformen der erfindungsgemäßen Einlege- oder Brandsohle.

Wird die Ausführung als Brandsohle verwendet, dann ist es notwendig, die Federstahlsohle an der Unterseite in Richtung zur Sohle mit einer flexiblen ganzflächigen Abdeckung oder einer teilflächigen Randeinfassung zu versehen, um beim Obermaterial einen Zwickanschiag zu erreichen.

Wird hingegen die Federstahlsohle als Einlegesohle verwendet, ist eine derartige sohlenseitige textile Abdeckung nicht notwendig.

Auch wenn die textile Membran oder textile Abdeckung einer sohlenseitigen Unterseite der Federstahlsohle entfällt, wäre gleichwohl ein Einbau als Brandsohle in einem Schuh möglich, wenn die flexible Federstahlsohle seitlich an das Obermaterial mit einem elastomeren Kunststoff angespritzt ist.

Ebenso ist der Einbau als Brandsohle dann möglich, wenn der Zwickeinschlag auf der Unterseite der Federstahlsohle angeklebt wird.

Vorteilhaft ist auch, dass die Druckplatte, die als elastische Membran die biegeelastische Federstahlsohle abdeckt, nunmehr mit einer Wellenstruktur nur über einen Teil der Länge der Einlegesohle oder der Brandsohle ausgestattet sein kann.

In einer anderen Ausführungsform kann sie sich jedoch auch über die gesamte Länge der Oberfläche der darunter liegenden federelastischen Sohle erstrecken. Die Druckplatte kann also in ihrer Länge verkürzt ausgebildet sein.

Die Wellenstruktur der Druckplatte kann sich demnach also nur über einen Teil der Sohle erstrecken oder auch über den gesamten Bereich.

Ebenso ist es möglich, die Luftauslasslöcher nicht nur seitlich anzuordnen, sondern auch nach oben. Die Wellenstruktur der Druckplatte kann im hinteren Bereich, wo ein Fersenkeil vorgesehen ist, entfallen, wodurch sich dann Hohlkanäle bilden, die jedoch keine Belüftungsfunktion haben. Solche Hohlkanäle ergeben jedoch ein zusätzliches Federungsvermögen des gesamten Sohlenaufbaus, weil diein den luftdicht abgeschlossenen Hohlkanälen vorhandenen, kompressiblen Lufteinschlüsse zu einer zusätzlichen Dämpfung beim Gehen führen.

In einer vorteilhaften Weiterbildung der Erfindung kann es vorgesehen sein, dass die Druckplatte mehrlagig ausgebildet ist und bevorzugt zwei verschiedene Shore-Härten aufweist.

Auf der Wellenstrukturseite, mit der sie direkt auf der gewellten Oberfläche der federelastischen Sohle aufliegt, hat sie z. B. eine Shore-Härte von 75. Diese Härte ist härter ist als die in Richtung zur Fußsohle hin eine weichere Decklage, z.B. mit einer Shore-Härte von 40. Dadurch kommt es zu einem Bettungseffekt der auf der Druckplatte ruhenden Fußsohle, weil die relativ harte Unterseite der Druckplatte nunmehr direkt mit ihrer harten Oberfläche auf der Wellenstruktur der Federstahlsohle aufliegt und zu dem gewünschten verstärkten Pumpeffekt führt, während die fußsohlenzugewandte Oberfläche der Druckbelüftungssohle einen Bettungseffekt für die darauf lagernde Fußsohle des Benutzers ausbildet.

Anstatt der mehrlagigen, werkstoffeinstückigen Ausführung der Druckplatte mit zwei verschiedenen Shore-Härten ist es auch möglich, ein Einlegeteil vorzusehen, welches unmittelbar mit der Unterseite der Druckplatte verbunden ist und sich im Sinn einer Pumpstruktur auf die Wellenstruktur der Federstahlsohle auswirkt, um sozusagen als Verstärkungsblatt oder als Pumpeffektplatte den Belüftungseffekt auf der darunter liegenden Federstahlsohle zu erhöhen, während die übrigen Bereiche der Druckplatte nunmehr nur die weiche Oberfläche der Pumpplatte ausbilden.

In einer Weiterbildung ist es vorgesehen, dass die in der Wellenstruktur der Federstahlsohle in Verbindung mit der darüber liegenden Druckplatte gebildeten Hohlräume mit einem offenzelligen Schaumstoff oder einem gleichen raumfüllenden und luftführenden Elastomer-Kunststoff ausgefüllt werden. Ebenso können mit Aktivkohle angereicherte Substanzen in den luftführenden Hohlräumen angeordnet sein.

Es kann auch vorgesehen sein, mindestens die luftführenden Hohlräume der Druckplatte und/oder der Federstahlsohle antibakteriell und/oder desodorierend zu beschichten.

Bei einer aus Metall gefertigen Federstahlsohle bietet sich die antibakterielle Beschichtung mit einer Kupfer-II-oxid-Beschichtung an.

Sofern auch die Druckplatte aus einer leicht biegbaren, elastischen Blechplatte oder einer gleichwertigen Kunststoffplatte besteht, kann diese auch mit einer geeigneten antibakteriellen Beschichtung versehen sein.

Als die luftführenden Hohlräume ausfüllendes Material kann auch eine in Längsrichtung der Hohlräume luftdurchlässige Wabenstruktur vorgesehen sein, die kompressibel ist und die dort enthaltende Luft bei Kompression durch die darüber liegende Druckplatte entweichen lässt. Auch diese Wabenstruktur kann desodorierend und/oder antibakteriell beschichtet sein.

Es ist im Übrigen nicht lösungsnotwendig dass die Wellenstruktur der Druckplatte exakt komplementär (spiegelbildlich) zur Wellenstruktur der darunter liegenden Federstahlsohle ist. Eine solche Ausführung wird zwar wegen des guten Wirkungsgrades der Belüftung bevorzugt, weil bei einer solchen komplementären Struktur jeder Wellenberg der Druckplatte mit jedem Wellental der Struktursohle einen annähernd in Querrichtung verlaufenden Belüftungskanal bildet. Darauf ist die Erfindung jedoch nicht beschränkt.

Vielmehr kann es in einer anderen Ausführung vorgesehen sein, dass beispielsweise jeweils nur jede zweite oder jede dritte Welle der Druckplatte mit der darunter liegenden komplementären Welle der Federstahlsohle einen Druckbelüftungskanal ausbildet, während die dazwischen liegenden Bereiche flach ausgebildet sind und keine oder nur eine verminderte Druckbelüftungsfunktion haben. Damit ergibt sich der Vorteil, dass sich Bereiche der Druckplatte formschlüssig an die Wellenstruktur der Struktursohle anlegen und dadurch eine verbesserte Verschiebungssicherung in axialer Richtung zwischen der Druckplatte und der Struktursohle gegeben ist.

In einer weiteren Ausführung kann es vorgesehen sein, dass zur verbesserten Befestigung der Druckplatte auf der Wellenstruktur der Struktursohle bestimmte Veränderungen an der Druckplatte vorgenommen werden.

In einer solchen ersten Ausführungsform ist vorgesehen, dass die Wellentäler der Druckplatte nicht stetig und bogenförmig ausgebildet sind, sondern als Flachstege oder als Bogenstege geformt sind. Diese Art der Stegausbildung gewährleistet eine verbesserte Befestigung der Druckplatte auf den Wellenbergen der darunter liegenden Struktursohle. Als Befestigung im Bereich der Flach- oder Bogenstege der Druckplatte auf den Wellenbergen der Struktursohie kann eine Klebeverbindung oder eine Schweißverbindung oder eine andere Stoffschlussverbindung verwendet werden.

Es kann darüber hinaus auch vorgesehen sein, dass die Struktursohle im Bereich der Wellenberge Ausnehmungen, Bohrungen oder Lochungen aufweist, in welche das Material der Druckplatte selbst oder deren Klebstoff formschlüssig eingreifen und dort verankert sind.

In einer anderen Ausführung ist auch eine mechanische Verbindung zwischen Druckplatte und der Struktursohle vorgesehen. Dabei kann es sich vorteilhaft um mechanisch wirkende Einrast- oder Klemmverbindungen handeln. In diesem Fall sind an der Unterseite der Druckplatte, von der Ebene der Druckplatte abstehende Noppen, Bolzen oder Klinken angeformt, die in zugeordnete, form-angepasste Ausnehmungen in der Struktursohle eingreifen und dort verriegelt sind. Es ist auch die kinematische Umkehrung einer solchen Verbindung möglich, bei der von der Oberfläche der Struktursohle abstehende Noppen, Bolzen oder Klinken in form-angepasste Ausnehmungen der darüber liegenden Druckplatte eingreifen.

In einer Weiterbildung der Erfindung ist ein neuartiger Aufbau der Struktursohle in Verbindung mit der darauf befestigten Druckplatte vorgesehen.
Es handelt sich um einen aus einem elastomeren Kunststoff bestehenden Stabilisierungsrand, der die Struktursohle randseitig mit ihrer Wellenstruktur einfasst und der die Struktursohle umlaufend mit einem zusätzlichen wellenförmigen Rand von z.B. 8 mm einfasst. Die Randeinfassung überdeckt, den Randbereich der Struktursohle und ist dort angeklebt ist oder angeschäumt oder angespritzt. Sie reicht mit ihrem äußeren Bereich etwa 8 mm über den Umriss der Federstahlsohle hinaus und setzt die Wellenstruktur der Federstahlsohle fort und damit auch die Belüftungsstruktur der Druckbelüftungssohle.

Die wellenförmige Randeinfassung erleichtert die Befestigung der Druckbelüftungssohle am Schaft des Schuhs.
Es müssen keine Werkzeuge oder Haltemittel an der Struktursohle angreifen, sondern nur an deren umlaufenden Stabilisierungsrand, und somit ist es einfacher, eine solche Druckbelüftungssohle mit dem Schaft des Schuhs zu strobeln oder zu zwicken.

Die angegebenen Maße für den umlaufender Stabilisierungsrand mit einer Breite von z. B. 16 oder 18 mm sind lediglich bevorzugt, wobei 8 mm auf der Innenseite der Struktursohle den Rand einfassen und 8 mm vom Umriss der Struktursohle abstehen. Es können auch andere Abmessungen verwendet werden.

Ebenso ist es möglich, statt einer Randeinfassung, welche die Struktursohle mit bevorzugt einem Rand von 8 mm innenliegend überdeckt, auch eine vollflächige Überdeckung der Struktursohle durch den Stabilisierungsrand zu ermöglichen.

Ferner ist es möglich, dass der Stabilisierungsrand mit seiner Belüftungsstruktur nicht die Wellenstruktur der Struktursohle an jeder Welle fortsetzt, sondern es kann in dieser Ausführung vorgesehen sein, dass der Stabilisierungsrand nur jede zweite oder dritte Welle der Strukturwelle fortsetzt und die jeweils dazwischen liegende Welle vollständig flächenbündig ausfüllt, um eine veränderte Biegestabilität der Struktursohle zu erreichen und insbesondere das Biegeverhalten der Federstahlsohle dadurch zu beeinflussen.

Für alle Ausführungen gilt bevorzugt, dass die auf der Struktursohle aufliegende Druckplatte, die bevorzugt aus einem geschäumten Kunststoff besteht (Polyurethanschaum) die Wellenstruktur der Struktursohle radial nach außen fortsetzt und über den Umriss der Struktursohle beispielsweise auch um ein Maß von z. B. 8 mm heraus steht, so dass sich der wellenförmige Stabilisierungsrand und die dort aufliegende Druckplatte im Bereich der umlaufenden Randeinfassung überlappen, sich gegenseitig abdecken und eine eigene Belüftungsstruktur bilden, welche die Belüftungsstruktur der Druckbelüftungssohle luftschlüssig in Richtung zur Innenseite des Schuhs fortsetzt.

Zur besseren Luftführung kann es auch vorgesehen sein, dass die Druckplatte in den randseitigen Mündungsbereichen an der Innenseite des Schuhs bogenförmige Ausschnitte aufweist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Draufsicht auf eine Ausführungsform einer Struktursohle mit einer die Struktursohle (angedeutet) abdeckenden Druckplatte
- Figur 2:: nicht Teil der beanspruchten Erfindung, Teilschnitt durch die Anordnung nach Figur 1 in Richtung der Linie II-II in unbelastetem Zustand der Druckplatte
- Figur 3:: nicht Teil der beanspruchten Erfindung, die gleiche Darstellung nach Figur 2 bei belasteter Druckplatte
- Figur 4:: nicht Teil der beanspruchten Erfindung, eine gegenüber Figur 3 abgewandelte Ausführungsform, bei der die Druckplatte aus einer elastomer verformbaren Platte besteht
- Figur 5:: nicht Teil der beanspruchten Erfindung, ein Schnitt gemäß der Linie V-V in Figur 1
- Figur 6:: nicht Teil der beanspruchten Erfindung, eine schematisierte Darstellung der Einwirkung einer plattenförmigen Druckplatte auf die Rippenstruktur der Struktursohle
- Figur 7:: ein gegenüber Figur 2 abgewandeltes Ausführungsbeispiel mit einer Druckplatte, die eine wellenförmige Struktur aufweist
- Figur 8:: eine gegenüber Figur 7 abgewandelte Ausführung, bei der eine mehrlagige Druckplatte gezeigt ist.
- Figur 9:: eine gegenüber Figur 7 und 8 abgewandelte Ausführung, bei welcher die luftführenden Kompressionsräume mit einem geeigneten luftführenden Material gefüllt sind.
- Figur10:: eine gegenüber den vorstehenden Ausführungen abgewandelte Ausführung, die zeigt, dass das Wellenprofil der Druckplatte von dem Wellenprofil der Struktursohle abweichen kann.
- Figur 11:: Schnitt durch eine Ausführung einer Druckplatte mit Flachstegen
- Figur 12:: Schnitt durch eine Verbindung zwischen Druckplatte und Struktursohle mit einer Druckplatte in einer zweiten Ausführung mit Bogenstegen
- Figur 13:: eine Ansicht auf die Druckbelüftungssohle von oben mit Darstellung der fußsohlenseitigen Drukplatte
- Figur 14:: eine Ansicht auf die Druckbelüftungssohle von unten
- Figur 15:: eine vergrößerte Seitenansicht des Fersenbereichs der druckbelüftungssohle in Richtung des Pfeils XV in Fig. 14
- Figur 16:: eine vergrößerte Seitenansicht des Vorderfußbereiches der Druckbelüftungssohle in Richtung des Pfeiles XVI in Fig. 14
- Figur 17:: eine Seitenansicht der Druckbelüftungssohle
- Figur 17A:: ein schematisierter Teil-Schnitt durch eine Druckbelüftungssohle
- Figur 18:: eine Unteransicht der Druckbelüftungssohle mit einer in gestrichelten Linien dargestellten Randeinfassung.

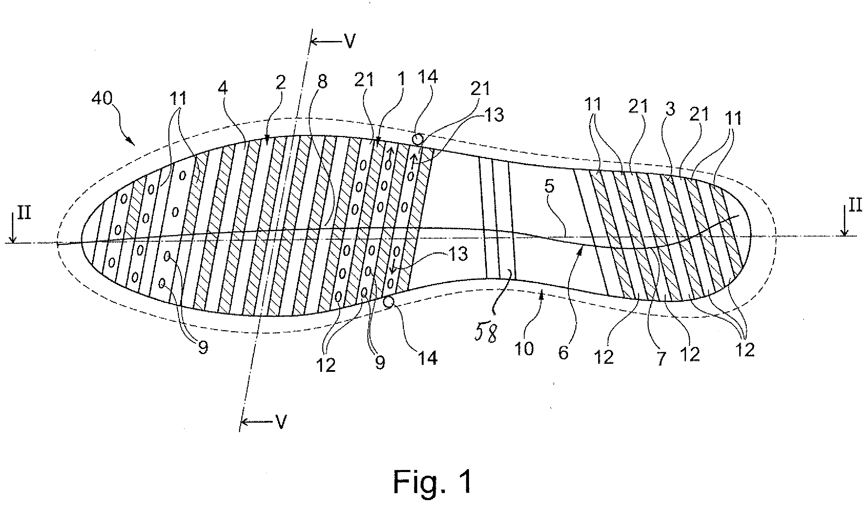

In Figur 1 ist allgemein eine aus einem Federmaterial bestehende Struktursohle 1 dargestellt, die ausführlich in den vorher genannten Druckschriften beschrieben wurde.

Auf die diesbezüglichen Druckschriften wird im Hinblick auf die Funktion und den Aufbau einer solchen Struktursohle 1 verwiesen. Dabei lässt die Struktursohle 1 eine Abrollbewegung in Längsrichtung der Struktursohle zu, aber eine Durchbiegung in einer hierzu senkrechten Richtung wird dadurch verhindert, dass sie durch die im schrägen Winkel zur Längsachse ausgerichtete Anordnung der Wellen 2 der Querprofilierung eine Querstabilität und eine Längsflexibilität aufweist.

Dies wird dadurch erreicht, dass sich die einzelnen Wellen 2 der Querprofilierung mindestens im Vorderfußbereich in einem Winkel zwischen 70 und 85 Grad, vorzugsweise 77 Grad, zur Längsmittenlinie erstrecken.

Somit verformen sich die Wellen nicht bei der Gehbewegung im Sinn einer Zusammendrückung (Kompression), wie es beim Stand der Technik in mehrfacher Hinsicht als nachteilig erkannt wurde; sie sind stattdessen trittstabil.

Im Ergebnis besteht die Struktursohle 1 aus einem Federstahl oder einem vergleichbaren Kunststoffmaterial und weist eine im Winkel zur Mittenlängslinie 5 verlaufende, rippenförmige Querprofilierung auf, die als Wellenprofil ausgebildet ist und aus einer Anzahl von aufeinander folgenden Wellen 7, 8 besteht, von denen jede Welle aus einem Wellenberg 11 und einem sich daran anschließenden Wellental 12 besteht.

Es sind ferner im Bereich der Querprofilierung Lochungen 9 vorhanden.

Die Querprofilierung im Fersenbereich 3 weist einen anderen Winkel auf als vergleichsweise die Querprofilierung im Vorderfußbereich 4.

Mit dem Bezugszeichen 6 ist im Übrigen die COP-Linie eingezeichnet, die sich bei der Benutzung der Struktursohle 1 bei Gewicht des Benutzers auf die Struktursohle 1 und während des Gehvorganges ergibt.

Erfindungsgemäß ist nun die Struktursohle 1 durch eine plattenförmige, biegeelastische Druckplatte 10 abgedeckt, deren Außenumriss etwas größer ist als der der Struktursohle.

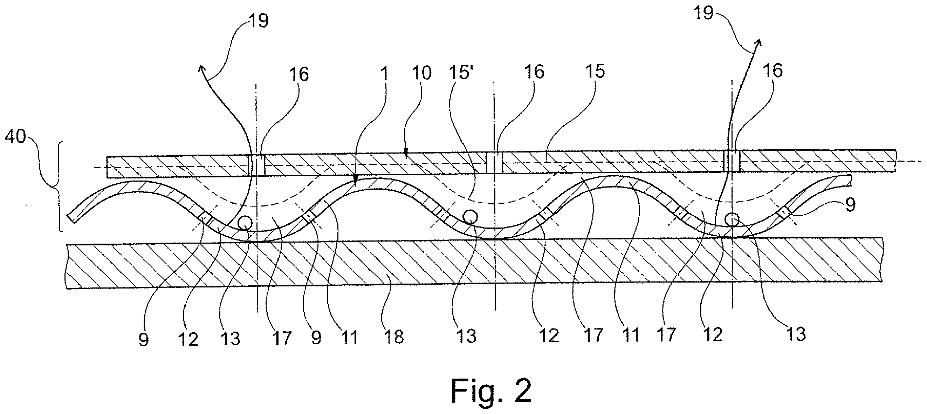

Nachdem erfindungsgemäß vorgesehen ist, dass die Druckplatte 10 möglichst luftschlüssig die Wellenberge nach oben hin abdeckt (siehe Figur 2), ist aus dem Vergleich zwischen Figur 1 und Figur 2 erkennbar, dass während des Gehvorganges nunmehr die Druckplatte 10 aufgrund ihrer Auflage auf die nicht nachgiebigen Wellenberge 11 der Struktursohle 1 nunmehr im Bereich der Wellentäler 12 in das jeweilige Wellental 12 hineinverdrängt wird, wie dies mit der Biegelinie 15' in Figur 2 dargestellt ist.

Die vorher ebene und durchgehende Biegelinie 15 der unverformten Druckplatte 10 geht während des Gehvorganges in die verformte Biegelinie 15' über und dadurch kommt es zu einem Kompressionseffekt im Bereich der Wellentäler 12, so dass dieser Bereich als Kompressionsraum 17 bezeichnet wird, in dem in Längsrichtung eine Luftströmung und ein Feuchtetransport in Pfeilrichtung 13 erfolgt.

Das bedeutet, dass der Luft- und Feuchtetransport in Längsrichtung des Kompressionsraums 17 erfolgt, und zwar im Bereich der Wellentäler 12 der Struktursohle 1, so dass dieser Luftstrom und Feuchtetransport an den Stirnseiten der rinnenförmigen Wellentäler 12 nach außen gelangt und in Pfeilrichtung 14 durch die seitlichen Umrisse der Druckplatte 10 nach oben in den Innenraum des Schuhs geleitet werden.

Es kann zusätzlich vorgesehen sein, dass die Druckplatte 10 eine Vielzahl von Bohrungen 16 aufweist, so dass der Luftstrom, der im rinnenförmigen Kompressionsraum 17 erzeugt wird, noch zusätzlich in Pfeilrichtung 19 nach oben durch die Druckplatte 10 hindurch in den Innenraum des Schuhs strömt und damit direkt auf die Fußunterseite des Benutzers trifft.

Somit verformt sich die Druckplatte 10 etwa wellenförmig in Form der Druckplatte 10' in die Wellenstruktur der Struktursohle 1 hinein.

Weil aber die Wellenberge 11 ein Gegenlager für die Druckplatte 10 bilden und andererseits die Wellentäler 12 unterseitig durch eine schuhseitige Gegenplatte 18 abgestützt sind, kommt es zu dem beschriebenen Kompressionseffekt und Kompressionsraum 17.

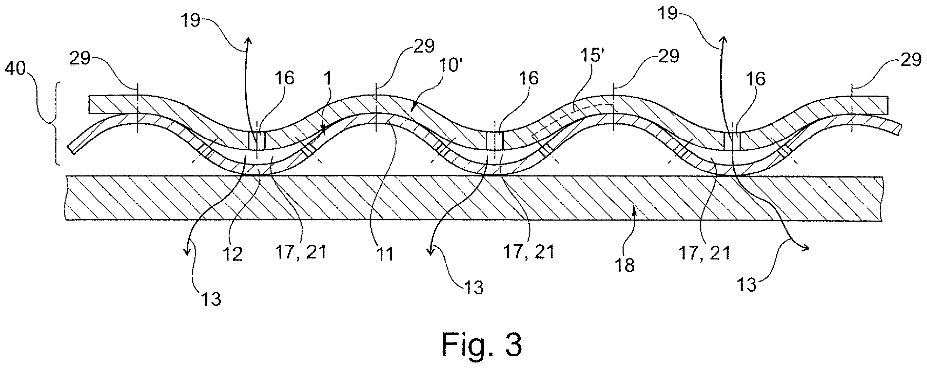

Dies ist in Figur 3 dargestellt. Es ist erkennbar, dass eine starke Volumenverkleinerung im Kompressionsraum 17 dadurch stattfindet, dass sich die Druckplatte 10 in ihrer Stellung 10' in die Wellentäler 12 der Struktursohle 1 hinein verformt. Die rinnenförmigen Wellentäler der Struktursohle können deshalb auch als Belüftungskanäle 21 bezeichnet werden, durch welche der Luftstrom stirnseitig aus den Belüftungskanäle 21 in Pfeilrichtung 13 ausströmt und im Übrigen auch in Pfeilrichtung 19 durch die Druckplatte 10 hindurch.

Es kann vorgesehen sein, dass die Auflagestellen (Verbindungsstellen 29) mit denen die plattenförmige Druckplatte 10 auf den Wellentälern 12 der Struktursohle 1 aufliegt, noch zusätzlich gegen Längs- und/oder Querverschiebung gesichert sind. Hier kann eine Verklebung stattfinden oder die Druckplatte kann durch mechanische Verbindungsmittel wie z. B. Nieten, Schrauben, Punktschweißungen, mechanische Rastmittel, mechanische Einhängeverbindungen oder dergleichen auf der Wellenstruktur der Struktursohle verschiebungsgesichert gehalten sein.

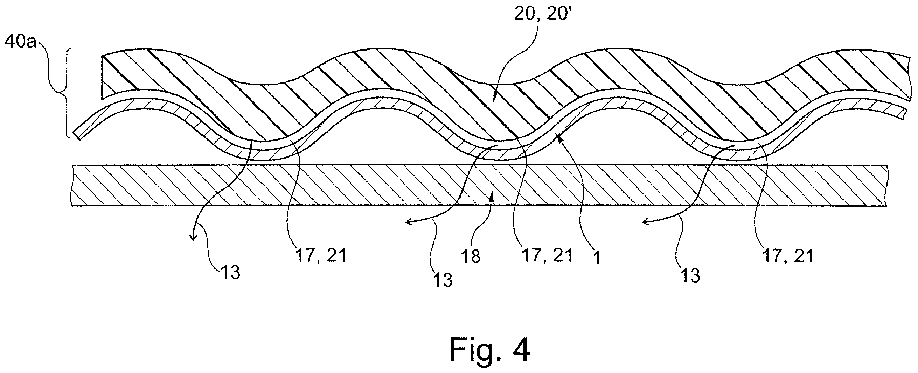

Die Figur 4 zeigt, dass anstatt einer plattenförmigen biegeelastischen Druckplatte 10 auch eine aus einem weich elastischen Material bestehende Druckplatte 20 verwendet werden kann, die bevorzugt aus einem elastomeren Material, wie z.B. PU-Schaum, Natur- oder Synthetik-Kautschuk, einem PDMA-Kunststoff oder einem geschlossenzelligen geschäumten Kunststoff bestehen.

Bei einer solchen, aus einem elastomeren Material bestehenden Druckplatte 20, 20' wird nur gefordert, dass sich das Material bei Druckbelastung (siehe Figur 4) wieder in den ursprünglichen plattenförmigen Zustand zurück verformt, so dass eine solche Druckplatte auch aus einem weich-elastischen Material bestehen könnte, welches bevorzugt aus einem offenzelligen oder geschlossenzelligen PU-Schaum oder einem anderen, geeigneten Kunststoffmaterial besteht.

Ansonsten gelten für die gleichen Teile der Figur 4 die gleiche Beschreibung, wie anhand der Figuren 1 bis 3 gegeben wurde.

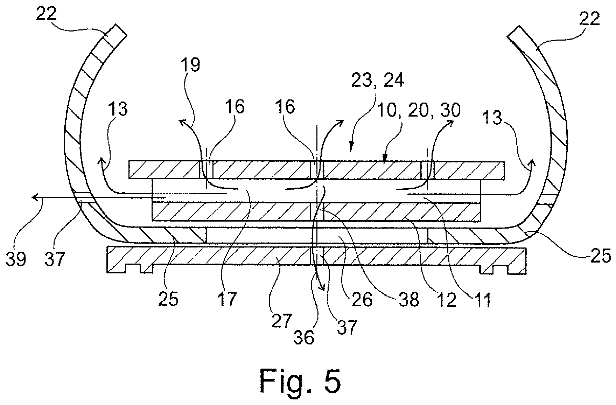

Die Figur 5 zeigt einen Schnitt durch die Struktursohle mit einer aufgelegten Druckplatte 10, 20, 30, wobei aus dem Schnitt der Figur 5 deutlich wird, dass die gesamte Anordnung nunmehr als Druckbelüftungssohle 40 bezeichnet werden kann, weil die Struktursohle 1 mit der aufgelegten Druckplatte 10, 20, 30 einen Verbund ergibt, der nachfolgend als Druckbelüftungssohle 40 bezeichnet wird. Die Druckbelüftungssohle kann deshalb als Einlegesohle oder als fest in einem Schuhaufbau integrierte Brandsohle verwendet werden.

Aus der Schnittansicht aus Figur 5 ergibt sich, dass eine solche Druckbelüftungssohle (bestehend aus der Struktursohle 1 und einem der Ausführungsbeispiele einer Druckplatte 10, 20, 30) nunmehr eine Einheit bildet, so dass diese Einheit entweder als Einlegesohle auf einer vorhandenen Brandsohle im Schuhaufbau eines Schuhs eingelegt werden kann oder die gesamte Einheit der Druckbelüftungssohle 40 kann auch unmittelbar in den Schuhaufbau als Brandsohle eingebaut sein.

Als Beispiel ist in Figur 5 der Einbau als Brandsohle dargestellt, wobei erkennbar ist, dass ausgehend von einer unteren, bodenseitigen Sohle 27 ein oberer Zwickeinschlag 25 gebildet ist, der seitlich an einer oberhalb der Sohle 27 angeordneten Distanzplatte 26 ausgebildet ist.

In diesem Zwickeinschlag 25 wird das Obermaterial 22 des Schuhaufbaus gehalten. Die Verbindung zwischen dem Obermaterial 22 und dem Zwickeinschlag 25 kann durch Strobeln oder durch Kleben erfolgen.

Im gezeigten Aufbau nach Figur 5 ist erkennbar, dass die Brandsohle 24 unmittelbar durch die Struktursohle 1 gebildet ist und aus dem - nicht maßstäblichen - Schnitt ist ferner erkennbar, dass durch ein Wellental 12 der Struktursohle 1 hindurch geschnitten wurde und sich dann in Längsrichtung der Querprofilierung ein Wellenberg ergibt. In diesem Zwischenraum ist der jeweilige rinnenförmige Kompressionsraum 10 ausgebildet, durch den ein Lufttransport in den Pfeilrichtungen 13 und 16 erfolgt.

Die Figur 5 beschreibt deshalb sowohl die Verwendung der Druckbelüftungssohle 40 als Einlegesohle 23, aber auch als Brandsohle 24, die unmittelbar in den Schuhaufbau eines Schuhs integriert ist. Es kann sich dabei um jeden bekannten Schuhtyp handeln, nämlich z.B. um Arbeitsschuhe, Freizeitschuhe, Sneaker, Sandalen, Mokassins, Damenpumps und dgl. mehr.

Ebenso sind die Belüftungswege der Zwangsbelüftung dargestellt, und es ist in einer Ausführung erkennbar, dass ein Teil des Luftstroms an der Innenseite des Obermaterials 22 in den Innenraum des Schuhs einströmt, während ein anderer Teil des Luftstromes durch die Bohrungen 16 in der Druckplatte 10, 20, 30 nach oben in den Innenraum des Schuhs gegen die Fußsohle des Benutzers strömt.

Die Figur 5 zeigt noch weitere Belüftungsmöglichkeiten für den Innenraum des Schuhs, die in Alleinstellung oder in Kombination mit den vorher genannten Belüftungsausführungen für sämtliche Typen einer Einlegesohle und/oder einer Brandsohle verwendbar sind.

So zeigt der Pfeil in Pfeilrichtung 39 auch die Möglichkeit, dass die von der Druckbelüftungssohle 40,40 A, 40 B erzeugte forcierte Luftströmung auch durch zugeordnete Ausnehmungen seitlich im Obermaterial 22 ausströmen können. Es wird bevorzugt, wenn im Bereich dieser Ausnehmungen eine semipermeable Membran 27 angeordnet ist, die einen Luftaustausch nach außen gestattet, aber das Eindringen von Feuchtigkeit nach innen verhindert.

Ferner ist als weitere Belüftungs- und Entlüftungsmöglichkeit angegeben, dass ausgehend von der Druckbelüftungssohle 40,40 A, 40 B, die als Einlegesohle oder als Brandsohle ausgebildet sein kann, auch eine direkte Be- und Entlüftung durch die Schuhsohle 27 des Schuhs erfolgen kann.

Auch hier kann im Bereich von sohlenseitigen Ausnehmungen 38 eine semipermeable Membran 37 angeordnet sein, um einen forcierten Luftdurchgang durch die sohlenseitig angeordneten Ausnehmungen 38 zu ermöglichen, ohne dass Feuchtigkeit durch die Ausnehmungen 38 nach innen, in den Schuh hinein, dringen kann.

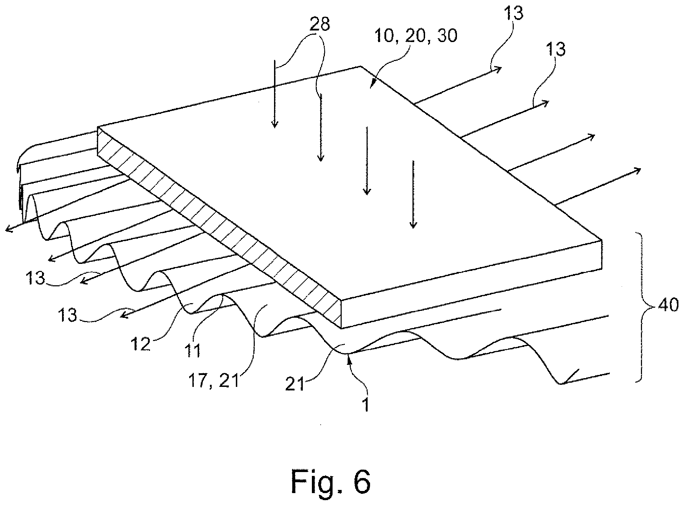

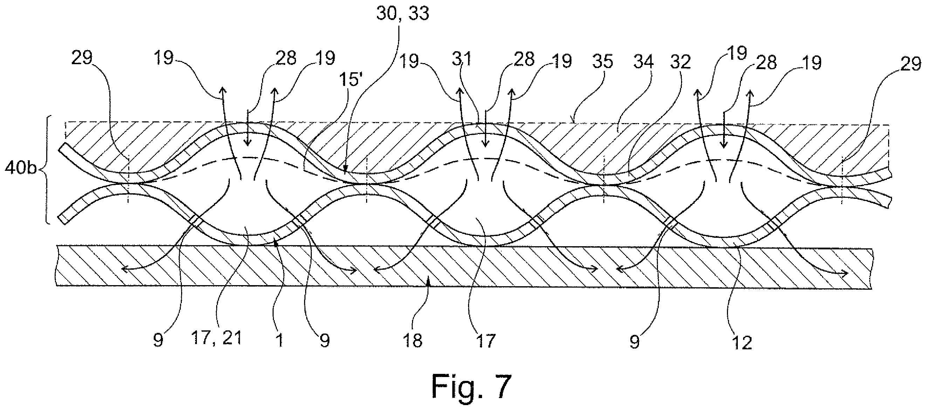

Die Figur 6 zeigt schematisiert die Funktion einer Druckplatte, wobei lediglich der Vereinfachung wegen eine plattenförmige Druckplatte 10, 20 dargestellt ist. Das gleiche Prinzip gilt aber auch für eine Wellenstruktur aufweisende Druckplatte 30, die noch anhand der Figur 7 beschrieben werden wird.

Aus Figur 6 ist erkennbar, dass durch das Körpergewicht des Benutzers, welches in Pfeilrichtung 28 von der Fußsohle auf die Oberseite der Druckplatte 10, 20, 30 ausgeübt wird, nunmehr eine Verformungskraft auf die Druckplatte 10, 20, 30 senkrecht oder annähernd senkrecht zu deren Ebene ausgeübt wird, die sich damit aufgrund der relativ unverformbaren Struktur der darunter liegenden Struktursohle 1 in die Wellentäler 12 der Struktursohle 1 hineinverformt und daher eine in Pfeilrichtung 13 erfolgende Zwangsbelüftung des hierdurch im Wellental 12 ausgebildeten Kompressionsraums 17 erbringt. Zur Steigerung des Belüftungseffektes und zur Steigerung des Volumens des Kompressionsraums 17 ist in einer Weiterbildung der Erfindung vorgesehen, dass gemäß Figur 7 die Druckplatte 30 auch eine Wellenstruktur 33 aufweisen kann, die zur Wellenstruktur 11, 12 der Struktursohle 1 komplementär ist und um eine Schwingung (Phase) zur Wellenstruktur der Struktursohle in Längsrichtung versetzt ist.

Dies bedeutet, dass jedem Wellenberg 31 der wellenförmigen Druckplatte 30 ein Wellental 12 der darunter liegenden Struktursohle 1 gegenüberliegt und dass analog jedes Wellental 32 der wellenförmigen Druckplatte 30 auf einem Wellenberg 11 der darunter liegenden Struktursohle 1 abgedichtet aufliegt.

Damit wird das Verdrängungsvolumen im Kompressionsraum 17 im Vergleich zu einer rein plattenförmigen Druckplatte 10, 20 verdoppelt, die Biegelinie 15' zeigt angedeutet die Verformung der wellenförmigen Druckplatte 30.

Die Biegeelastizität der wellenförmigen Druckplatte 30 sollte so gewählt werden, dass eine Verformung der Wellenstruktur 33 möglich ist, während eine solche Verformung einer Wellenstruktur 11, 12 bei der darunter liegenden Struktursohle 1 nicht notwendig ist.

Die Figur 7 zeigt in einem weiteren Ausführungsbeispiel, dass auch die Wellenstruktur 33 der Druckplatte 30 noch eine zusätzliche elastomere Beschichtung 34 tragen kann, die bevorzugt aus einem weich elastischen, schaumartigen Material besteht.

Damit wird eine plane Aufstandsfläche an der Oberseite der Druckplatte 30 erzielt und es ergibt sich ein angenehmes Abrollgefühl für den Fuß eines Benutzers.

In einer anderen Ausgestaltung kann es vorgesehen sein, dass die elastomere Beschichtung 34 wesentlich höher ausgebildet ist, d. h. dass auch die Wellenberge 31 der wellenförmigen Druckplatte 30 noch mit einem genügenden Überdeckungsgrad von der elastomeren Beschichtung 34 abgedeckt sind.

Das Material der Druckplatte 30 kann bevorzugt aus einem verformbaren Kunststoffmaterial bestehen, wie z. B. eine 2 bis 4 mm dicke Kunststoffplatte, in welche die Wellenstruktur eingeprägt oder in anderer Weise eingeformt ist.

Bei allen beschriebenen Ausführungsformen besteht der Vorteil, dass eine Zwangs- oder Druckbelüftung im Innenraum des Schuhs allein durch eine Gewichtsverlagerung der Fußsohle des Benutzers erfolgt und es sich um ein in sich geschlossenes System handelt, welches nicht auf die Außenzufuhr von Luftmengen durch eine semipermeable Membran angewiesen ist.

Bei dieser bekannter Ausführungsform hat sich bei Verwendung einer semipermeablen Membran herausgestellt, dass Dichtungsprobleme im Hinblick auf Eindringen von Wasser bestehen.

Solche Probleme hat die vorgestellte Druckbelüftung nicht, denn es handelt sich um ein im Schuhinnenraum angeordnetes, in sich abgeschlossenes Druckbelüftungssystem, welches nicht auf die Zufuhr von Luft von außen über eine semipermeable Membran angewiesen ist.

Es kann auch zu einem Absaugeffekt kommen, in der Weise, dass bei einer Druckbelastung der jeweiligen oberen Druckplatte 10, 20, 30 Luft aus dem Innenraum des Schuhs durch die Druckplatte hindurch in die Wellentäler der Struktursohle eingesaugt wird und bei einer andersartigen Gewichtsverlagerung oder bei einer Gehbewegung nunmehr die aus dem Innenraum abgesaugte Luft stirnseitig aus dem Kompressionsraum an die Innenseite des Obermaterials des Schuhs verdrängt wird.

Es handelt sich also nicht nur um einen in senkrechter Richtung zur Beinlängsachse des Benutzers erfolgenden Luft- und Feuchtetransport, sondern auch um einen in senkrechte Richtung hierzu erfolgenden Luft- und Feuchtetransport, der etwa in der Ebene der Struktursohle stattfindet und an den Innenseiten des Obermaterials des Schuhs nach oben umgelenkt wird.

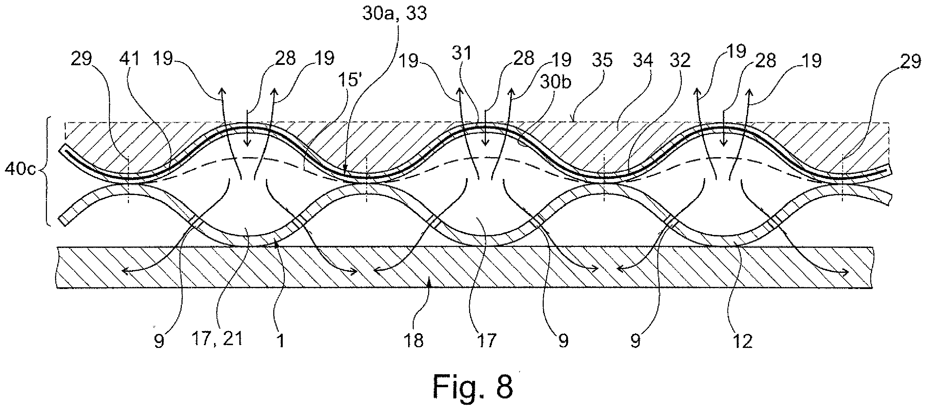

Die Figur 8 zeigt eine aus 2 Lagen bestehende Druckplatte 30, deren obere, der Fußsohle des Benutzers zugewandte Lage 30a weich ausgebildet ist, während die untere Lage 30b, die direkt auf der Wellenstruktur der Struktursohle 1 aufliegt, härter ausgebildet ist. Es handelt sich also um einen mehrlagigen Schichtaufbau 41.

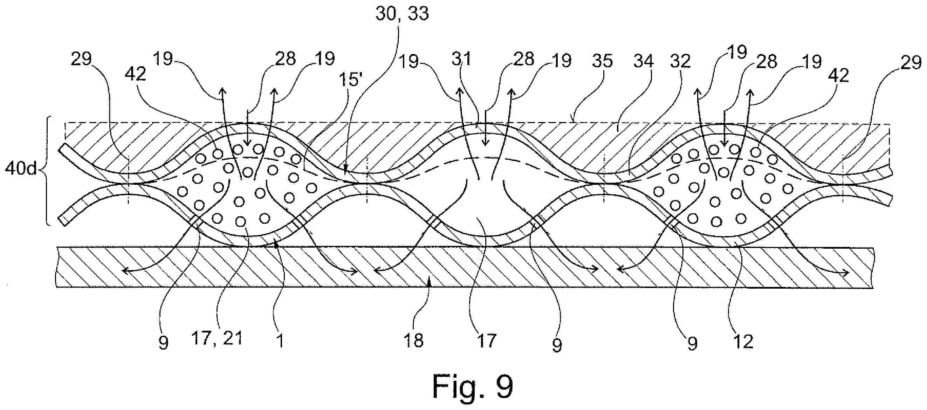

Die Figur 9 zeigt als weiteres Ausführungsbeispiel, dass die luftführenden Kompressionsräume 17 und die hierdurch gebildeten Belüftungskanäle 21 mit einem offenporigen, luftleitenden und kompressiblen Füllmaterial 42 raumfüllend ausgefüllt sein können. Es kann sich dabei um einen offenzelligen Schaum oder ein mit Aktivkohle oder anderen desodorierenden und/oder antibakteriellen Substanzen imprägnierter Kunststoffschaum oder um eine gleich wirkende Wabenstruktur handeln.

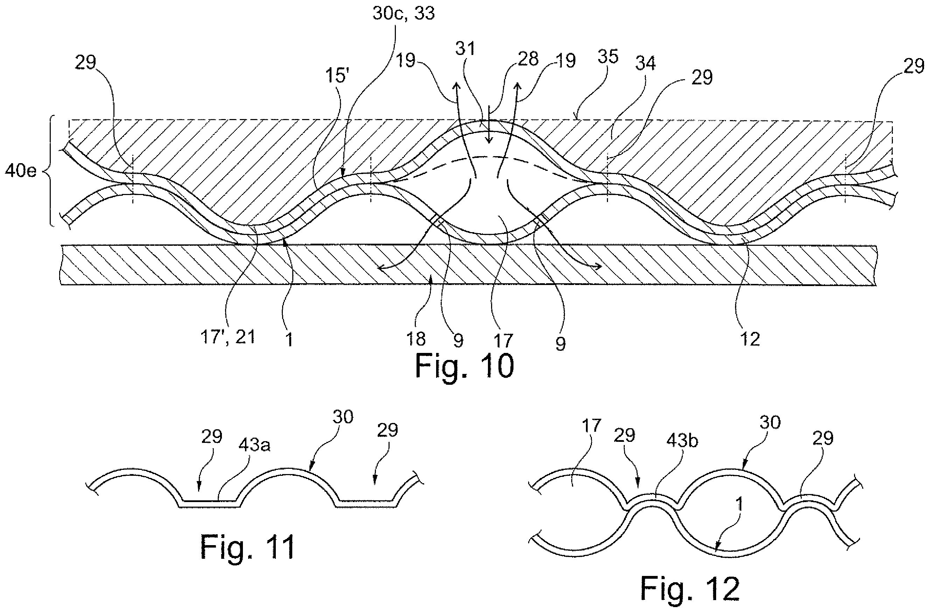

Die Figur 10 zeigt, dass es nicht lösungsnotwendig ist, dass jeder Welle der Struktursohle 1 auch eine Welle der Druckplatte 30, 30a, 30b, 30c entspricht. So kann es in diesem Ausführungsbeispiel vorgesehen sein, dass die Druckplatte 30c Wellentäler aufweist, welche in die Wellentäler der Struktursohle 1 mindestens teilweise formschlüssig eingreifen und somit die wellenförmige Druckplatte 30c in Längsrichtung gegen Verschiebung auf der Wellenstruktur der Struktursohle 1 sichern. Dadurch können sich Kompressionsräume 17, 17' mit unterschiedlichem Volumen bilden. In einem anderen Ausführungsbeispiel kann der Kompressionsraum 17' auch vollständig entfallen, weil sich z.B. jede zweite oder dritte Wellenstruktur der Druckplatte 30c vollständig und formschlüssig an die Wellenstruktur der Struktursohle 1 anpasst und diese ausfüllt.

In dem Ausführungsbeispiel nach den Figuren 11 und 12 sind verschiedene Ausbildungen der Druckplatte 30 gezeigt, wobei jedoch diese Ausführungen auch auf die in den vorherigen Zeichnungen gezeigten Ausführungen der Druckplatte 30a, 30b, 30c anwendbar sind.

Um eine verbesserte Verbindung zwischen der Druckplatte 30 und der darunter liegenden Wellenstruktur der Struktursohle 1 zu erreichen ist es in dem Ausführungsbeispiel nach Figur 11 vorgesehen, dass die Wellentäler der Druckplatte 30 als Flachsstege 43a ausgebildet sind. Damit ergibt sich eine verbesserte Anpassung der Wellenstruktur der Druckplatte 30 an die Wellenstruktur der Struktursohle 1.

In dem Ausführungsbeispiel nach Figur 12 ist dargestellt, dass die Flachstege 43a auch als Bogenstege 43b ausgebildet sein können, um eine noch verbesserte Anpassung der Druckplatte 30 im Bereich der Wellenberge der Struktursohle 1 zu erreichen.

Wie in der allgemeinen Beschreibung angegeben, kann die Verbindung zwischen der Struktursohle 1 und der darüber liegenden Druckplatte 10,10', 30 über verschiedene Verbindungsarten erfolgen, wobei Schweiß oder Klebeverbindungen und andere Stoffschlussverbindungen erwähnt wurden, ebenso wie mechanische Verbindungen. Es ist auch jede Kombination zwischen mechanischen Verbindungen und den oben erwähnten Schweiß- oder Klebeverbindungen möglich.

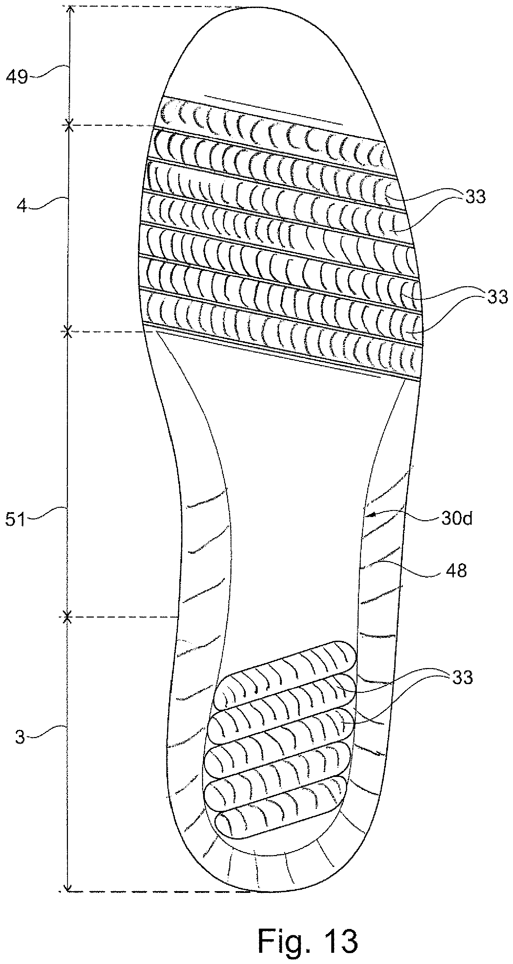

Die Figur 13 zeigt die Draufsicht auf eine Druckbelüftungssohle 40, 40a-e mit einer Ansicht der fußsohlen-zugewandten Oberseite der Druckplatte 30d in der Ausbildung als Einlegesohle. Unter einem Textilgewebe 48 ist die Wellenstruktur 33 der Druckplatte gut erkennbar und die sich auf der Wellenstruktur 33 abwälzende Fußsohle überträgt die Drucklast auf die Wellenstruktur 33 der Druckplatte 30d, die dadurch in die trittstabile Wellenstruktur 11, 12 der Struktursohle 1 hinein verdrängt wird. Die im Fersenbereich 3 angeordnete Wellenstruktur 33 der Druckplatte 30d ist in diesem Ausführungsbeispiel seitlich hermetisch abgeschlossenen und bildet einen luftgefüllten Kompressionsraum, der beim Gehen als Luftpolster wirkt.

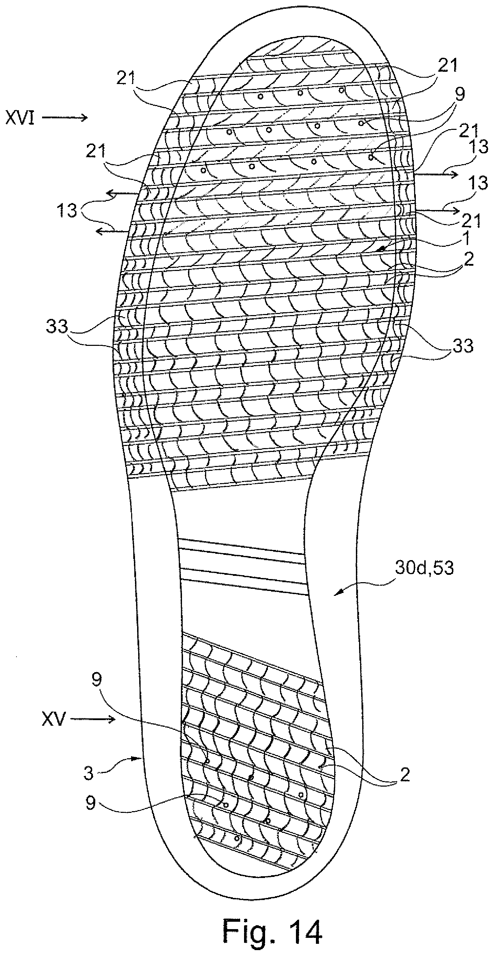

Die Figur 14 zeigt die um 180 Grad gewendete Draufsicht auf die Druckbelüftungssohle 40, 40a-e mit einer Druckplatte, die mit einem elastomeren Druckkörper 53, der aus einem geschäumten, weich elastischen Kunststoffkörper besteht.

Die Wellenstruktur der Struktursohle 1 setzt sich randseitig in die die Struktursohle 1 umlaufend überragende Druckplatte 30d fort. Somit ist gewährleistet, dass sich die zwischen der Wellenstruktur 11, 12 der Struktursohle 1 und der komplementären Wellenstruktur 33 der Druckplatte 30d entstehenden Luftströme in Pfeilrichtung 13 seitlich aus den Belüftungskanälen 21 entströmt. Ein Teil der Luftströme entströmt durch die Lochungen 9 der Struktursohle 1. Ein anderer Teil der Luftströme kann durch Lochungen in der Druckplatte 30d gegen die Fußsohle entströmen. Es ist dargestellt, dass sich die Belüftungsstrukturen nur auf einen Teil des Vorderfußes und auf den Fersenbereich erstrecken. Darauf ist die Erfindung nicht beschränkt. Wie in Figur 1 angedeutet, können sich die Belüftungsstrukturen vollflächig über die gesamte Oberfläche erstrecken und sich im Anschlussbereich 58 treffen.

Dies gilt für alle Ausführungsbeispiele, insbesondere auch für die Figur 13, wo nur ein Teil der Oberseite der Druckbelüftungssohle mit der Belüftungsstruktur dargestellt ist.

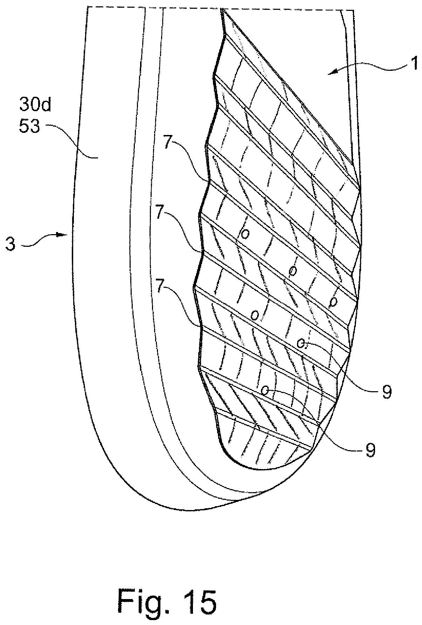

Figur 15 zeigt den Fersenbereich 3 der Druckbelüftungssohle 30d, wo erkennbar ist, dass der elastomere Druckkörper, der Teil der Druckplatte 30d ist, im Fersenbereich verdickt ausgebildet ist.

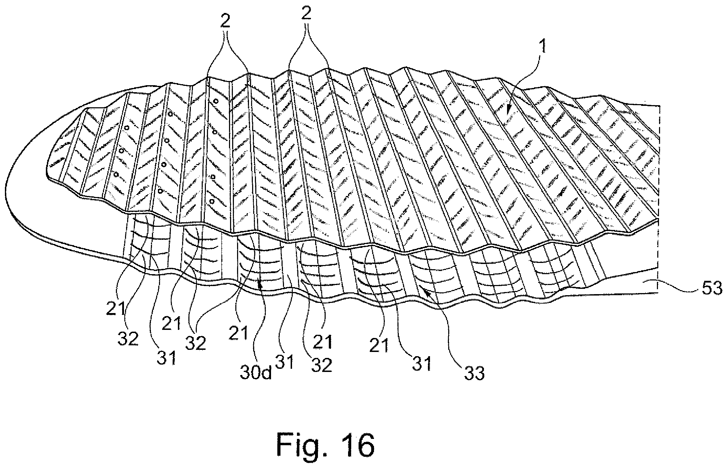

Die Figur 16 zeigt den Vorderfußbereich 49, 50 der Druckbelüftungssohle 30d mit der nach oben zeigenden Struktursohle 1, die im Gebrauchsfall unten im Schuh liegt und entweder Teil einer Einlegesohle oder Teil der Brandsohle des Schuhs ist.

In dieser perspektivischen Darstellung sind die seitlichen Öffnungen der Belüftungskanäle 21 erkennbar. Die Wellenstruktur 31, 32 der Druckplatte 30d ist komplementär zur Wellenstruktur 11, 12 der Struktursohle 1. Die Ausführung nach den Figuren 13 bis 18 entspricht den Ausführungsbeispielen nach den Figuren 3 bis 10.

Die durch die komplementären Wellenstrukturen von Struktursohle und Druckplatte 30, 30a-d gebildeten Belüftungskanäle 21 haben ein besonders großes Volumen und bewirken einen effektiven Belüftungseffekt. Darüber hinaus hat der Benutzer das Gefühl "auf Luft zu laufen".

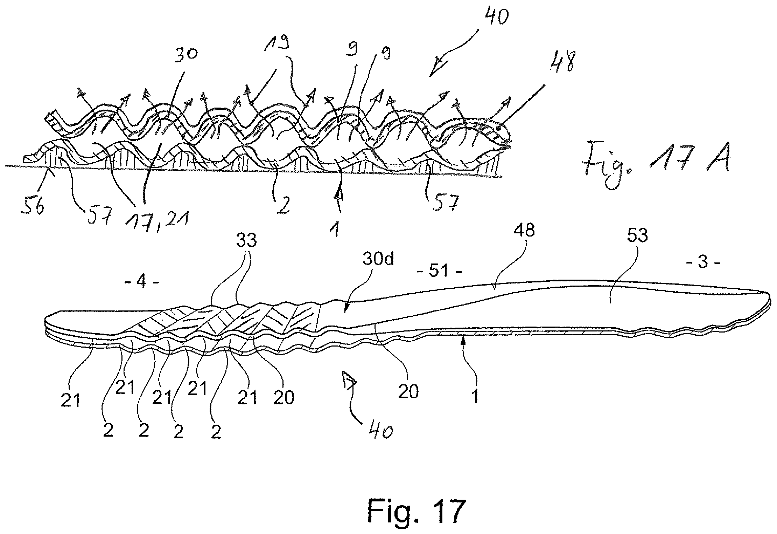

In der Seitenansicht der Figur 17 sind die gleichen Teile mit den gleichen Bezugszeichen versehen. Die Wellenstruktur der Struktursohle 1 ist nur im Vorderfußbereich und im Fersenbereich angeordnet. Die Wellenstruktur 33 der Druckplatte 30d ist nur im Vorderfußbereich vorgesehen. Die Druckplatte 30d ist dreischichtig aufgebaut und besteht aus der plattenförmigen Druckplatte 20, die im Vorderfußbereich die zur Struktursohle 1 komplementäre Wellenstruktur 33 ausbildet. Die Druckplatte ist mit dem weich-elastischen Druckkörper 53 verbunden, der im Fersenbereich verdickt ausgebildet ist und als obere Abdeckung ein Textilgewebe 48 trägt.

Die Figur 17A zeigt schematisiert einen Teilschnitt durch eine Druckbelüftungssohle, mit der Darstellung des Grundprinzips der Erfindung. Die Druckbelüftungssohle nach allen beschriebenen Ausführungen bildet somit ein Luftbett mit Pumpeffekt für die darauf abrollende menschliche Fußsohle.

Auch wenn in einem bevorzugten Ausführungsbeispiel die luftführenden Röhrenkanäle (=Kompressionskanäle) mit einem elastischen, offen- oder geschlossen-porigen Material gefüllt sind, sollte der Querschnitt des jeweiligen Röhrenkanals zu mindestens 40 % seines Querschnitts aus Luft bestehen.

In den vorherigen Ausführungsbeispielen wurde davon ausgegangen, dass die Struktursohle an der Sohlenseite (Unterseite) die vorher beschriebenen Wellen 2 aufweist. Um eine bessere Verarbeitung einer solchen Struktursohle 40 a, b, c, d, e als Einlegesohle oder als Brandsohle in einem Schuh zu ermöglichen, ist in einer vorteilhaften Weiterbildung vorgesehen, dass die an der Unterseite der Struktursohle 1 angeordneten Wellen mit einem Ausfüllmaterial 57 ausgefüllt sind, um eine glatte, sohlenseitige Klebefläche 56 zu erhalten.

Ein solches Ausfüllmaterial wird in der Fachsprache auch als "Ausballmasse" bezeichnet und kann z.B. aus einem gießfähigen Wachs oder einem elastischen Kunststoff, z.B. einem Polyurethanschaum bestehen.

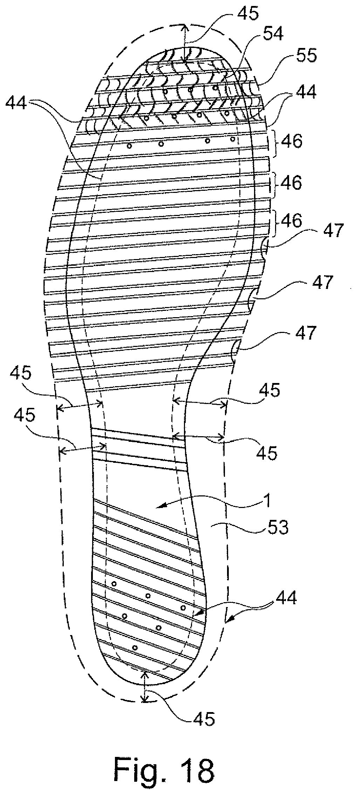

Damit kann die Druckbelüftungssohle einfach auf die schuhseitig vorhandene Innensohle in einen Schuh eingelegt werden. Bei der Verwendung als Sohlenchassis zum Einbau als Brandsohle wird die verbreiterte Randeinfassung am Schuhschaft befestigt (siehe die folgende Figur 18) und die nunmehr glatte Unterseite der Druckbelüftungssohle bildet die Gegenfläche für die dort anzubringende Laufsohle des Schuhs, die dort angeklebt, geschweißt, angespritzt oder angenäht werden kann.

Die Figur 18 zeigt ein solches abgewandeltes Beispiel einer Ausführung einer Druckbelüftungssohle 40, für die sämtliche Erläuterungen der vorgenannten Beispiele gelten. Eine besonders gute maschinelle Verarbeitung der Druckbelüftungssohle ergibt sich dann, wenn an die Unterseite der gewellten Struktursohle 1 eine flexible Randeinfassung 44 angeformt wird. Alle weiteren Merkmale der Druckbelüftungssohle bleiben jedoch gleich.

Mit den gestrichelten Linien 54, 55 in Figur 18 ist eine solche flexible Randeinfassung 44 angedeutet. In der Praxis ist die Randeinfassung als dünne Kunststoffplatte oder Folie an der Unterseite der Struktursohle 1 angeklebt oder angespritzt.

Die Randeinfassung 44 hat bevorzugt die gleiche Wellenform wie die Struktursohle 1 und setzt die Wellenform der Struktursohle 1 seitlich nach außen fort. Damit setzt sich auch die aus der Randeinfassung 44 und der darauf liegenden Druckplatte 20, 20' gebildete kompressible Belüftungskanalstruktur 46 in die Belüftungsstruktur der Druckbelüftungssohle 40, 40a-40e fort.

Die gleiche Abbildung gilt auch für die Ausbildung als Brandsohle. Der einfacheren Beschreibung wegen wird in der folgenden Beschreibung die Verwendung als Brandsohle geschildert. Um eine vereinfachte Integration der Struktursohle 1 mit der Befestigung am Schuhschaft durch Strobeln oder Zwicken zu erreichen ist vorgesehen, dass die Struktursohle 1 randseitig - bevorzugt umlaufend - mit der aus Kunststoff bestehenden, elastomeren Randeinfassung 44 verbunden wird. Die für den Zwickeinschlag notwendigen Werkzeuge können dann an der Randeinfassung 44 angreifen und müssen nicht direkt an der harten Struktursohle 1 angreifen.

Um eine Verbesserung der Luftausströmung an der Innenseite des Schuhs zu erreichen, kann es vorgesehen sein, dass die Mündungen der Belüftungskanäle 21 in der Randeinfassung 44 als bogenförmige Ausschnitte 47 ausgebildet sind. Diese Ausführung kann für alle Ausführungsbeispiele der Figuren 1 bis 18 vorgesehen sein.

Für alle Ausführungsbeispiele der Figuren 1 bis 18 gilt, dass sich die wellenförmigen Strukturen der Struktursohle und damit auch die damit zusammen wirkenden Belüftungsstrukturen entweder über den gesamten Oberflächenbereich der Druckbelüftungssohle 40 erstrecken können oder auch nur über einen kleineren Teil der Oberfläche. Die Figur 1 zeigt nur einen Teil der verwendeten Strukturen, die sich nicht über die gesamte Oberfläche erstrecken.

In dieser Zeichnung ist jedoch schematisch dargestellt, dass sich die gezeichneten Strukturen bis in den Anschlussbereich 58 zwischen dem Vorderfußbereich und dem Fersenbereich erstrecken können, sodass sich die im unterschiedlichen Winkel zueinander angeordneten Strukturen von Vorderfußbereich und Fersenbereich im Anschlussbereich 58 treffen.

### Zeichnungslegende

- 1: Struktursohle
- 2: Wellen
- 3: Fersenbereich
- 4: Vorderfußbereich
- 5: Mittellängslinie
- 6: COP-Linie (barfuß)
- 7: Welle (bei 3)
- 8: Welle (bei 4)
- 9: Lochung
- 10: Druckplatte 10'
- 11: Wellenberg
- 12: Wellental
- 13: Pfeilrichtung
- 14: Pfeilrichtung
- 15: Biegelinie (von 10)
- 15': Biegelinie
- 16: Bohrung (in 10)
- 17: Kompressionsraum, 17'
- 18: Gegenplatte
- 19: Pfeilrichtung
- 20: Druckplatte 20'
- 21: Belüftungskanal
- 22: Obermaterial
- 23: Einlegesohle
- 24: Brandsohle
- 25: Zwickeinschlag
- 26: Distanzplatte
- 27: Sohle
- 28: Pfeilrichtung (Druckkraft)
- 29: Verbindungsstelle
- 30: Druckplatte
- 31: Wellenberg (von 30) 30a, 30b, 30c
- 32: Wellental (von 30)
- 33: Wellenstruktur (von 30)
- 34: elastomere Beschichtung
- 35: Aufstandsfläche
- 36: Pfeilrichtung
- 37: semipermeable Membran
- 38: Ausnehmung
- 39: Pfeilrichtung
- 40: a, b, c, d Druckbelüftungssohle
- 41: Schichtaufbau
- 42: Füllmaterial
- 43: Steg 43a Flachsteg 43b Bogensteg
- 44: Randeinfassung
- 45: Überdeckungsbereich
- 46: Belüftungskanalstruktur (von 44)
- 47: bogenförmiger Ausschnitt (optional)
- 48: Textilgewebe
- 49: Zehenbereich
- 50: Ballenbereich
- 51: Mittelfußbereich
- 52: Fersenbereich
- 53: elastomerer Druckkörper (30d)
- 54: innere Begrenzung
- 55: äußere Begrenzung
- 56: Klebefläche
- 57: Ausfüllmaterial
- 58: Anschlussbereich

## Patentansprüche

1. Einlegesohle oder Brandsohle für einen Schuh, die als Druckbelüftungssohle (40a-e) in der Form ausgebildet ist, dass auf einer unteren Sohle eine biegeelastische Druckplatte (10, 20, 30) aufliegt, die vom Körpergewicht des Benutzers beim Gehen in Querprofilierungen im Zwischenraum zwischen der fußsohlenseitigen Druckplatte (10, 20, 30) und der unteren Sohle hinein verdrängbar ist und das dort enthaltene Luftvolumen im Sinn einer Belüftung verdrängt, wobei die untere Sohle der Druckbelüftungssohle (40a-e) als wellenförmige Struktursohle (1) aus einem Federstahl oder einem vergleichbaren Kunststoffmaterial gefertigt ist, deren Querprofilierungen als Wellenprofil mit Wellenbergen (11) und Wellentälern (12) ausgebildet sind und gegenüber einer senkrecht auf die Struktursohle (1) einwirkenden Druckkraft druckstabil und verformungsfest sind, und dass die fußsohlenseitige Druckplatte (10, 20, 30) in die formstabilen Wellentäler (12) der Struktursohle (1) in der Art einer Pump- und/oder Kompressionsplatte hinein verdrängbar ist, wobei die Druckplatte (30) aus einer, eine Wellenstruktur (33) aufweisenden biegeelastischen Platte besteht, und dass die Wellenstruktur (33) der Druckplatte (30) komplementär oder mindestens teilweise komplementär zur Wellenstruktur der Struktursohle (1) ist, wobei die Wellentäler (32) der Wellenstruktur (33) der Druckplatte (30) auf den Wellenbergen (11) der Struktursohle (1) aufliegen, **dadurch gekennzeichnet, dass** die Wellenberge (31) der Druckplatte (30) den Wellentälern (12) der Struktursohle (1) gegenüberliegen und den rinnenförmigen, druckbelüfteten Kompressionsraum (17) bilden.

2. Einlegesohle oder Brandsohle nach Anspruch 1, **dadurch gekennzeichnet, dass** das jeweilige Wellental (12) der Struktursohle (1) mit der das Wellental (12) von oben abdeckenden Druckplatte (10, 20, 30) einen rinnenförmigen, druckbelüfteten Kompressionsraum (17) bildet, in dessen Längserstreckung eine Luft- und Feuchtezirkulation gegeben ist.

3. Einlegesohle oder Brandsohle nach Anspruch 2, **dadurch gekennzeichnet, dass** der rinnenförmige Kompressionsraum (17) mindestens an einer Seite stirnseitig offen ist.

4. Einlegesohle oder Brandsohle nach Anspruch 2 oder 3 , **dadurch gekennzeichnet, dass** der rinnenförmige Kompressionsraum (17) über Lochungen (9) in der Struktursohle (1) be- und entlüftbar ist.

5. Einlegesohle oder Brandsohle nach einem der Ansprüche 2 bis 4, **dadurch gekennzeichnet, dass** der rinnenförmige Kompressionsraum (17) auch über Bohrungen (16) in der Druckplatte (10, 20, 30) be- und entlüftbar ist.

6. Einlegesohle oder Brandsohle nach einem der Ansprüche 1 bis 5, **dadurch gekennzeichnet, dass** die Wellenberge (31) der Druckplatte (30) geeignet sind, sich biegeelastisch in die Wellentäler (12) der Struktursohle (1) hinein zu verformen.

7. Einlegesohle oder Brandsohle nach einem der Ansprüche 1 bis 6, **dadurch gekennzeichnet, dass** auf der Oberseite der Druckplatte (10, 20, 30) eine zur Fußsohle des Benutzers gerichtete, elastomere Beschichtung (34) angeordnet ist, die vorzugsweise aus einem, einen Memory-Effekt ausbildenden Kunstsoff-Material gebildet ist.

8. Einlegesohle oder Brandsohle nach einem der Ansprüche 1 bis 7, **dadurch gekennzeichnet, dass** die Druckplatte (10, 20, 30) etwa flächengleich mit der darunter liegenden Struktursohle (1) ist.

9. Einlegesohle oder Brandsohle nach einem der Ansprüche 1 bis 8, **dadurch gekennzeichnet, dass** die aus Struktursohle (1) und Druckplatte (10, 20, 30) bestehende Druckbelüftungssohle (40,40a, 40b) als Halb- oder als Vollsohle ausgebildet ist.

10. Einlegesohle oder Brandsohle nach einem der Ansprüche 1 bis 9, **dadurch gekennzeichnet, dass** die Druckbelüftungssohle (40, 40a, 40b) über das Obermaterial (22) und/oder die Schuhsohle (27) be- und entlüftbar ist.

11. Einlegesohle oder Brandsohle nach Anspruch 10, **dadurch gekennzeichnet, dass** im Bereich der Be- und Entlüftungsöffnungen eine semipermeable Membran (37) angeordnet ist.

12. Einlegesohle oder Brandsohle nach einem der Ansprüche 1 bis 11, **dadurch gekennzeichnet, dass** die Struktursohle (1) eine Abrollbewegung in Längsrichtung der Struktursohle zulässt, aber eine Durchbiegung in einer hierzu senkrechten Richtung dadurch verhindert, dass sie durch die im schrägen Winkel zur Längsachse ausgerichtete Anordnung der Wellen (2) der Querprofilierung eine Querstabilität und eine Längsflexibilität aufweist.

13. Einlegesohle oder Brandsohle nach Anspruch 12, **dadurch gekennzeichnet, dass** sich die einzelnen Wellen (2) der Querprofilierung mindestens im Vorderfußbereich in einem Winkel zwischen 70 und 85 Grad, vorzugsweise 77 Grad, zur Längsmittenlinie erstrecken.

14. Einlegesohle oder Brandsohle nach einem der Ansprüche 1 bis 13, **dadurch gekennzeichnet, dass** mindestens die Struktursohle (1) randseitig mit einer elastomeren Randeinfassung (44) verbunden ist.

15. Einlegesohle oder Brandsohle nach Anspruch 14, **dadurch gekennzeichnet, dass** die Randeinfassung (44) in Verbindung mit der dort aufliegenden Druckplatte (20, 20') eine Belüftungskanalstruktur (46) ausbildet, welche mit den Belüftungskanälen (21) der Druckbelüftungssohle (40, 40a-40e) luftschlüssig verbunden ist.

## Claims

1. Insole or midsole for a shoe which is designed as a pressure-ventilation sole (40a-e) such that a flexurally elastic pressure plate (10, 20, 30) rests on a lower sole and is displaceable into transverse profiling in the gap between the foot sole-side pressure plate (10, 20, 30) and the lower sole by the user's body weight when walking and displaces the air volume contained there in the sense of ventilation, wherein the lower sole of the pressure-ventilation sole (40a-e) is manufactured as a corrugated structured sole (1) from a spring steel or a comparable plastic material, the transverse profiling of which is designed as a corrugated profile with corrugation peaks (11) and corrugation troughs (12) and is stable to pressure and resistant to deformation with respect to a compressive force acting perpendicularly on the structured sole (1), and in that the foot sole-side pressure plate (10, 20, 30) is displaceable into the dimensionally stable corrugation troughs (12) of the structured sole (1) like a pumping plate and/or compression plate, wherein the pressure plate (30) consists of a flexurally elastic plate having a corrugated structure (33), and in that the corrugated structure (33) of the pressure plate (30) is complementary or at least partly complementary to the corrugated structure of the structured sole (1), wherein the corrugation troughs (32) of the corrugated structure (33) of the pressure plate (30) rest on the corrugation peaks (11) of the structured sole (1), **characterised in that** the corrugation peaks (31) of the pressure plate (30) are opposite the corrugation troughs (12) of the structured sole (1) and form the channel-like, pressure-ventilated compression space (17).

2. Insole or midsole according to claim 1, **characterised in that** the respective corrugation trough (12) of the structured sole (1) forms a channel-like pressure-ventilated compression space (17) with the pressure plate (10, 20, 30) covering the corrugation trough (12) from the top, air circulation and moisture circulation being provided in the longitudinal extension of said compression space (17).

3. Insole or midsole according to claim 2, **characterised in that** the channel-like compression space (17) is open on the end-face side at least on one side.

4. Insole or midsole according to claim 2 or 3, **characterised in that** the channel-like compression space (17) can be ventilated and vented via perforations (9) in the structured sole (1).

5. Insole or midsole according to one of claims 2 to 4, **characterised in that** the channel-like compression space (17) can also be ventilated and vented via bores (16) in the pressure plate (10, 20, 30).

6. Insole or midsole according to one of claims 1 to 5, **characterised in that** the corrugation peaks (31) of the pressure plate (30) are suitable for being deformed into the corrugation troughs (12) of the structured sole (1) in flexurally elastic manner.

7. Insole or midsole according to one of claims 1 to 6, **characterised in that** an elastomeric coating (34) directed to the foot sole of the user is arranged on the upper side of the pressure plate (10, 20, 30), said coating (34) preferably being formed from a plastic material developing a memory effect.

8. Insole or midsole according to one of claims 1 to 7, **characterised in that** pressure plate (10, 20, 30) has approximately the same area as the structured sole (1) lying underneath.

9. Insole or midsole according to one of claims 1 to 8, **characterised in that** the pressure-ventilation sole (40, 40a, 40b) consisting of structured sole (1) and pressure plate (10, 20, 30) is designed as a half sole or as a full sole.

10. Insole or midsole according to one of claims 1 to 9, **characterised in that** the pressure-ventilation sole (40, 40a, 40b) can be ventilated and vented via the upper material (22) and/or the shoe sole (27).

11. Insole or midsole according to claim 10, **characterised in that** a semi-permeable membrane (37) is arranged in the region of the ventilation openings and venting openings.

12. Insole or midsole according to one of claims 1 to 11, **characterised in that** the structured sole (1) allows a rolling movement in the longitudinal direction of the structured sole, but prevents bending in a direction perpendicular thereto **in that** it has transverse stability and longitudinal flexibility due to the arrangement of the corrugations (12) of the transverse profiling aligned at an oblique angle to the longitudinal axis.

13. Insole or midsole according to claim 12, **characterised in that** the individual corrugations (2) of the transverse profiling extend at least in the forefoot region at an angle between 70 and 85 degrees, preferably 77 degrees, to the longitudinal centre line.

14. Insole or midsole according to one of claims 1 to 13, **characterised in that** at least the structured sole (1) is connected to an elastomeric edge border (44) on the edge side.

15. Insole or midsole according to claim 14, **characterised in that** the edge border (44) in conjunction with the pressure plate (20, 20') resting there forms a ventilation duct structure (46) which is connected in air-tight manner to the ventilation ducts (21) of the pressure-ventilation sole (40, 40a-40e).

## Revendications

1. Semelle à insérer ou semelle première pour une chaussure, qui est conformée en semelle à aération par pression (40a-e) avec une forme telle que sur une semelle inférieure est posée une plaque de pression (10, 20, 30) élastique en flexion qui, lors de la marche, est apte à être repoussée par le poids du corps de l'utilisateur dans des profilages transversaux dans l'espace intermédiaire entre la plaque de pression (10, 20, 30) côté plante du pied et la semelle inférieure et repousse dans le sens d'une aération le volume d'air contenu à cet endroit, dans laquelle la semelle inférieure de la semelle à aération par pression (40a-e) est fabriquée en tant que semelle de structure (1) ondulée en un acier à ressort ou un matériau de matière plastique comparable dont les profilages transversaux sont conformés en profil ondulé avec des crêtes d'ondulation (11) et des creux d'ondulation (12) et sont stables en pression et résistants à la déformation à l'encontre d'une force de pression agissant verticalement sur la semelle de structure (1), et que la plaque de pression (10, 20, 30) côté plante de pied est apte à être repoussée dans les creux d'ondulation (12) de forme stable de la semelle de structure (1) à la manière d'une plaque de pompe et/ou de compression, dans laquelle la plaque de pression (30) est constituée d'une plaque élastique en flexion présentant une structure ondulée (33), et que la structure ondulée (33) de la plaque de pression (30) est complémentaire ou au moins partiellement complémentaire de la structure ondulée de la semelle de structure (1), dans laquelle les creux d'ondulation (12) de la structure ondulée (33) de la plaque de pression (30) sont posés sur les crêtes d'ondulation (11) de la semelle de structure (1),
**caractérisée en ce que** les crêtes d'ondulation (31) de la plaque de pression (30) sont en face des creux d'ondulation (12) de la semelle de structure (1) et forment l'espace de compression (17) aéré par pression en forme de conduit.

2. Semelle à insérer ou semelle première selon la revendication 1, **caractérisée en ce que** le creux d'ondulation (12) respectif de la semelle de structure (1) forme avec la plaque de pression (10, 20, 30) couvrant le creux d'ondulation (12) par le haut un espace de compression (17) aéré par pression en forme de conduit dans l'extension longitudinale duquel il y a une circulation d'air et d'humidité.

3. Semelle à insérer ou semelle première selon la revendication 2, **caractérisée en ce que** l'espace de compression (17) en forme de conduit est ouvert côté frontal au moins d'un côté.

4. Semelle à insérer ou semelle première selon la revendication 2 ou 3, **caractérisée en ce que** l'espace de compression (17) en forme de conduit est apte à être aéré et désaéré par des perforations (9) dans la semelle de structure (1).

5. Semelle à insérer ou semelle première selon l'une des revendications 2 à 4, **caractérisée en ce que** l'espace de compression (17) en forme de conduit est aussi apte à être aéré et désaéré par des perçages (16) dans la plaque de pression (10, 20, 30).

6. Semelle à insérer ou semelle première selon l'une des revendications 1 à 5, **caractérisée en ce que** les crêtes d'ondulation (31) de la plaque de pression (30) sont appropriées pour se déformer de manière élastique en flexion en entrant dans les creux d'ondulation (12) de la semelle de structure (1).

7. Semelle à insérer ou semelle première selon l'une des revendications 1 à 6, **caractérisée en ce que** sur le côté supérieur de la plaque de pression (10, 20, 30) est disposé un revêtement élastomère (34) dirigé vers la plante du pied de l'utilisateur, qui est formé de préférence d'un matériau de matière plastique formant un effet de mémoire.

8. Semelle à insérer ou semelle première selon l'une des revendications 1 à 7, **caractérisée en ce que** la plaque de pression (10, 20, 30) a à peu près la même surface que la semelle de structure (1) située au-dessous.

9. Semelle à insérer ou semelle première selon l'une des revendications 1 à 8, **caractérisée en ce que** la semelle à aération par pression (40, 40a, 40b) constituée de la semelle de structure (1) et de la plaque de pression (10, 20, 30) est conformée en une demi-semelle ou une semelle entière.

10. Semelle à insérer ou semelle première selon l'une des revendications 1 à 9, **caractérisée en ce que** la semelle à aération par pression (40, 40a, 40b) est apte à être aérée et désaérée par le matériau supérieur (22) et/ou la semelle de chaussure (27).

11. Semelle à insérer ou semelle première selon la revendication 10, **caractérisée en ce que** dans la zone des ouvertures d'aération et de désaération est disposée une membrane semiperméable (37).

12. Semelle à insérer ou semelle première selon l'une des revendications 1 à 11, **caractérisée en ce que** la semelle de structure (1) autorise un mouvement de roulement dans la direction longitudinale de la semelle de structure, mais empêche une flexion dans une direction perpendiculaire à celle-ci du fait que par la disposition des ondulations (2) du profilage transversal orientée suivant un angle incliné par rapport à l'axe longitudinal, elle présente une stabilité transversale et une flexibilité longitudinale.

13. Semelle à insérer ou semelle première selon la revendication 12, **caractérisée en ce que** les ondulations (2) individuelles du profilage transversal s'étendent au moins dans la zone avant du pied suivant un angle entre 70 et 85 degrés, de préférence de 77 degrés, par rapport à l'axe longitudinal médian.

14. Semelle à insérer ou semelle première selon l'une des revendications 1 à 13, **caractérisée en ce qu'**au moins la semelle de structure (1) est reliée du côté du bord à une bordure élastomère (44).

15. Semelle à insérer ou semelle première selon la revendication 14, **caractérisée en ce que** la bordure (44) forme en liaison avec la plaque de pression (20, 20') posée à cet endroit une structure de canal d'aération (46) qui est reliée de manière étanche à l'air aux canaux d'aération (21) de la semelle à aération par pression (40, 40a-e).
